# EUROPÄISCHE PATENTANMELDUNG

(11) **EP 3 181 707 A1**
(43) Veröffentlichungstag der Anmeldung: **21.06.2017**
(21) Anmeldenummer: 15201342.1
(22) Anmeldetag: 18.12.2015
(51) Int. Cl.: C14C 3/20, C08G 8/20

(54) **VERFAHREN ZUR HERSTELLUNG VON LEDER- ODER PELZ-HALBFABRIKATEN**

(71) Anmelder: LANXESS Deutschland GmbH, 50569 Köln (DE)
(72) Erfinder: Bley, Matthias, 42697 Solingen (DE); Konrad, Michael, 51371 Leverkusen (DE); Tysoe, Chris, 51375 Leverkusen (DE); Reiners, Jürgen, 51375 Leverkusen (DE)

(57) **Zusammenfassung**

Verfahren zur Herstellung von Leder- oder Pelz-Halbfabrikaten, dadurch gekennzeichnet, dass Häute oder Felle in Gegenwart eines Kondensationsproduktes der Komponente a), dessen Struktureinheiten abgeleitet sind von Phenolsulfonsäure, Dihydroxydiphenylsulfon und Formaldehyd, bei einem pH-Wert von 6,5 - 8,5, bevorzugt 7 - 8, behandelt werden.

## Beschreibung

Die vorliegende Erfindung betrifft ein Verfahren zur Herstellung von Leder- oder Pelz-Halbfabrikaten unter Verwendung des Kondensationsproduktes der Komponente a), die danach hergestellten Leder- oder Pelz-Halbfabrikate, eine Mischung enthaltend das Kondensationsprodukt der Komponente a) sowie ihre Verwendung zum Behandeln von Häuten oder Fellen, sowie Verfahren zur Herstellung von Ledern oder Pelzen unter Einsatz der nach dem erfindungsgemäßen Verfahren erhaltenen Leder- oder Pelz-Halbfabrikate, auch unter Verwendung der Mischung enthaltend das Kondensationsprodukt der Komponente a), sowie die erhaltenen Leder und Pelze.

Kondensationsprodukte, deren Struktureinheiten abgeleitet sind von Phenolsulfonsäure, Dihydroxydiphenylsulfon und Formaldehyd, sind prinzipiell bekannt und z.B. in Ullmanns Enzyklopädie der technischen Chemie (Band 16, 1978, S. 138-140) beschrieben. Auch ihre Verwendung in Gerbverfahren ist vorbeschrieben, so zum Beispiel in EP 1416058 A1 oder in EP 459168 A2. In letzteren sowie in vielen literaturbekannten Verfahren werden meist bereits Metall-gegerbte, bevorzugt Chrom-gegerbte, Halbfabrikate (im Falle der Chromgerbung als "Wet Blue" bezeichnet) eingesetzt, wobei die Kondensationsprodukte lediglich in einer Nachgerbung (d.h. der Nachbehandlung der bereits gegerbten Leder oder Pelze) eingesetzt werden, um die haptischen und optischen Eigenschaften der bereits gegerbten Leder oder Pelze zum Beispiel hinsichtlich Farbe, Fülle, Weichheit und Egalität zu optimieren. Bei den zuvor beschriebenen Anwendungsverfahren entfalten die Kondensationsprodukte keine Gerbfunktion, da bereits gegerbte Halbfabrikate als Substrate eingesetzt werden.

Die Lederherstellung mittels Chrom-haltiger Gerbstoffe stellt z.B. bei der Herstellung von Schuhoberleder die dominierende Gerbmethode dar. Im gegerbten Leder sollten nach einer ordnungsgemäßen Gerbung nur Chrom-Verbindungen mit Chrom in der Oxidationsstufe (III) vorliegen, die als nicht gesundheitsgefährdend eingestuft sind. Bei unsachgemäßer Gerbung oder mangelnder Nachbehandlung des Leders mit stark oxidierenden Chemikalien können jedoch hochtoxische Chrom-Verbindungen mit Chrom in der Oxidationsstufe (VI) entstehen.

Daher ist ein Gerbverfahren, das auf einer metallfreien Gerbung basiert, erstrebenswert.

Insbesondere im Bereich der Automobilleder-Herstellung gibt es einen großen Bedarf nach metallfrei gegerbten Ledern. Das Standardverfahren zur Herstellung metallfrei gegerbter Leder beruht auf der Verwendung von metallfrei gegerbten Halbfabrikaten an Stelle von Wet Blue. Diese Halbfabrikate, die auch als Wet White-Leder bezeichnet werden, sind beispielsweise durch Behandeln der Häute oder Felle mit Glutardialdehyd zugänglich.

In klassischen Gerbverfahren werden Häute oder Felle vor der Gerbung dem Verfahrensschritt des Pickelns unterzogen. Unter dem Verfahrensschritt des Pickelns versteht man einen Behandlungsschritt des zu gerbenden Materials vor der Gerbung, bei dem das zu gerbende Hautmaterial zur Vorbereitung der Gerbung im sauren pH-Bereich und zur Vermeidung einer Säureschwellung mit Hilfe von starken Säuren und Salz, vorzugsweise mit einer Mischung enthaltend Ameisensäure und/oder Schwefelsäure in Gegenwart von Natriumchlorid, behandelt wird, wobei der pH-Wert der wässrigen Gerbflotte auf 2 bis 3,5 eingestellt wird. Dadurch wird bevorzugt erreicht, dass der eingesetzte Gerbstoff besser in die Haut eindringt. Der Pickel hat einige Nachteile: So ist mit dem Einsatz von Natriumchlorid eine große Salzfracht des Abwassers sowie ein hoher Wasserbedarf verbunden, welche kostenintensiv sowie umweltbelastend sind. Weiterhin ist der Pickel ein zusätzlicher Arbeitsschritt, der sich auf die Kosten ungünstig auswirkt. Zudem erfordert die Einstellung des pH-Wertes eine sorgfältige Kontrolle und bedeutet damit einen zusätzlichen Verfahrensaufwand. Bedingt durch den niedrigen pH-Wert kann es auch zu einer Schädigung des Hautmaterials durch Hydrolyse des Kollagens kommen, aus der negative Auswirkungen auf das herzustellende Leder resultieren.

Daher ist ein Gerbverfahren, das ohne den vorherigen Schritt des Pickelns auskommt, erstrebenswert.

Aus der Anmeldung WO 2010130311A1 ist ein Gerbverfahren bekannt, das in einer bevorzugten Ausführungsform auch eine Pickel-freie Durchführung eines Gerbverfahrens offenbart. Die gerbaktive Substanz in diesem Verfahren erfüllt das Kriterium eines aromatisches Amins und einer reaktiven organischen Halogenverbindung. Diarylamine sind häufig karzinogen oder stehen unter Verdacht einer karzinogenen Wirkung. Ein weiterer Nachteil dieses Verfahrens ist, dass die Gegenwart von absorbierbarem organischem Halogen (AOX) im Abwasser nicht gänzlich ausgeschlossen werden kann. Durch die Gegenwart von Chloridionen bei diesem Gerbverfahren können Maschinenteile durch Korrosion beschädigt werden.

Aus der WO 2012136565A1 sind Polycarbamoylsulfonat-haltige Gerbstoffe bekannt, die die oben genannten Nachteile nicht aufweisen.

Aufgabe der vorliegenden Erfindung war es, ein Verfahren zur Herstellung von Leder- oder Pelz-Halbfabrikaten bereitzustellen, das die im Stand der Technik genannten Nachteile überwindet. Bevorzugt sollte das Verfahren ein Verfahren zur Herstellung metallfrei gegerbter Leder- oder Pelz-Halbfabrikate sein, d.h. von Wet White-Ledern oder -Pelzen. Weiterhin war es das Ziel der vorliegenden Erfindung, dass das Verfahren bevorzugt auf den Verfahrensschritt des Pickelns verzichtet. Zudem war es ein Ziel, dass das Verfahren zu Leder- oder Pelz-Halbfabrikaten, bevorzugt Wet White-Ledern oder -Pelzen führt, die sich bevorzugt durch eine hohe Schrumpftemperatur auszeichnen. Weiterhin wünschenswert war es, einen vereinfachten Gerbprozess ohne Korrekturen während der Verarbeitung, eine kürzere Laufzeit des Gesamtverfahrens, und eine effektive Kontrolle der Penetration des Gerbstoffs mittels eines Indikators bereitzustellen.

Überraschenderweise wurde gefunden, dass die Verwendung des Kondensationsproduktes der Komponente a) in Verfahren zur Behandlung von Häuten oder Fellen, insbesondere von Blößenmaterial, zu Leder- oder Pelz-Halbfabrikaten führt, bevorzugt Wet White-Ledern oder -Pelzen, die sich durch hohe Schrumpftemperaturen, Weichheit, Fülle, Sprungelastizität, Abwesenheit eines Narbenzugs sowie große Vorteile bei der mechanischen Verarbeitung, so z.B. verbessertes Verarbeitungsverhalten beim Abwelken (mechanisches Entwässern) und beim Falzen (Dickenregulierung), auszeichnen. Zudem wird in dem erfindungsgemäßen Verfahren bevorzugt auf den Verfahrensschritt des Pickelns verzichtet. Darüber hinaus weist das erfindungsgemäße Verfahren einen vereinfachten Gerbprozess ohne Korrekturen während der Verarbeitung, eine kürzere Laufzeit des Gesamtverfahrens, und eine effektive Kontrolle der Penetration des Gerbstoffs mittels eines Indikators auf.

Die Erfindung betrifft daher ein Verfahren zur Herstellung von Leder- oder Pelz-Halbfabrikaten, dadurch gekennzeichnet, dass Häute oder Felle in Gegenwart eines Kondensationsproduktes der Komponente a), dessen Struktureinheiten abgeleitet sind von Phenolsulfonsäure, Dihydroxydiphenylsulfon und Formaldehyd, bei einem pH-Wert von 6,5 - 8,5, bevorzugt 7-8, behandelt werden.

Unter "Häute oder Felle" wird im Rahmen dieser Anmeldung eine Tierhaut oder ein Fell verstanden, die/das nach den für die Wasserwerkstatt üblichen und dem Fachmann bekannten Schritten wie z.B. Entfleischen, Spalten, Entkälkung erhalten wird, und die/das zuvor noch nicht einer Gerbung unterzogen worden ist.

Unter "Blößenmaterial" wird im Rahmen dieser Anmeldung eine Tierhaut verstanden, die enthaart vorliegt, und die nach den für die Wasserwerkstatt üblichen und dem Fachmann bekannten Schritten wie z.B. Enthaaren, Entfleischen, Spalten, Entkälkung erhalten wird, und die zuvor noch nicht einer Gerbung unterzogen worden ist.

Unter "Blößengewicht" wird im Rahmen dieser Anmeldung das Gewicht der im Gerb- bzw. Nachgerbverfahren eingesetzten Haut oder des Fells bzw. des Halbfabrikats verstanden.

"Behandeln von Häuten oder Fellen, insbesondere Blößenmaterial," bedeutet im Rahmen dieser Anmeldung die Behandlung von Häuten oder Fellen, insbesondere Blößenmaterial, mit einem Gerbstoff zur Herstellung von Leder- oder Pelz-Halbfabrikaten, wobei die Schrumpftemperatur des gegerbten Haut- bzw. Fellmaterials während der Gerbung ansteigt, so dass mindestens eine hydrothermale Stabilisierung des Haut- bzw. Fellmaterials erreicht wird, die eine nachfolgende Verarbeitung durch mechanische Operationen zulässt und eine Schädigung durch die mechanische und thermische Belastung (Reibungswärme beim Falzen) vermeidet.

"Gerbstoff" bedeutet im Rahmen dieser Anmeldung, dass dieser Stoff bei Verwendung zur Behandlung von Häuten oder Fellen, insbesondere Blößenmaterial, zu einer Erhöhung der Schrumpftemperatur führt.

Unter "Leder- oder Pelz-Halbfabrikate" werden im Rahmen dieser Anmeldung Leder- bzw. Pelz-Zwischenprodukte verstanden, die aus Häuten oder Fellen, insbesondere Blößenmaterial, erhalten wurden, und deren Schrumpftemperatur so hoch ist, dass mindestens eine hydrothermale Stabilisierung des Hautmaterials erreicht wurde, die eine nachfolgende Verarbeitung durch mechanische Operationen zulässt und eine Schädigung durch die mechanische und thermische Belastung (Reibungswärme beim Falzen) vermeidet. Solche Leder- oder Pelz-Halbfabrikate wurden noch nicht einer Nachgerbung zur Optimierung der haptischen und optischen Eigenschaften unterzogen.

Unter "Wet White-Leder" bzw. "Wet White-Pelz" werden im Rahmen dieser Anmeldung Leder- bzw. Pelz- Halbfabrikate verstanden, die aus metallfrei gegerbten Häuten oder Fellen, insbesondere Chrom-frei gegerbten Häuten oder Fellen, erhalten wurden.

Unter "Wet Blue-Leder" bzw. "Wet Blue-Pelz" werden im Rahmen dieser Anmeldung Leder- bzw. Pelz-Halbfabrikate verstanden, die aus Metall-gegerbten Häuten oder Fellen, insbesondere Chrom-gegerbten Häuten oder Fellen, erhalten wurden.

Unter "Leder" bzw. "Pelz" werden im Rahmen dieser Anmeldung Leder bzw. Pelze verstanden, die nach einer Nachgerbung von Leder- bzw. Pelz-Halbfabrikaten mit weiteren Stoffen, die zur Optimierung der haptischen und optischen Eigenschaften, so zum Beispiel hinsichtlich Farbe, Fülle, Weichheit und Egalität, beitragen, erhalten wurden.

In einer bevorzugten Ausführungsform ist das erfindungsgemäße Verfahren ein Verfahren zur Herstellung von Wet White-Ledern und -Pelzen.

In einer bevorzugten Ausführungsform sind die in dem erfindungsgemäßen Verfahren eingesetzten Häute oder Felle Blößenmaterial.

In einer weiteren bevorzugten Ausführungsform ist das erfindungsgemäße Verfahren ein Verfahren zur Herstellung von Leder- oder Pelz-Halbfabrikaten, das ohne den Verfahrensschritt des Pickelns erfolgt.

Unter dem Verfahrensschritt des "Pickelns" wird im Rahmen dieser Anmeldung der Behandlungsschritt vor der Behandlung von Häuten oder Fellen mit einem Gerbstoff verstanden, bei dem die Häute oder Felle mit einer wässrigen Lösung enthaltend Säure und Salz behandelt werden, welche einen pH-Wert von 2-3,5 aufweist. Die Säure kann organisch oder anorganisch sein. Bevorzugt ist die Säure wenigstens eine Säure ausgewählt aus der Gruppe bestehend aus Ameisensäure, Salzsäure und Schwefelsäure, besonders bevorzugt bestehend aus Ameisensäure und Schwefelsäure. Das Salz ist bevorzugt Natriumchlorid.

Der pH-Wert in dem erfindungsgemäßen Verfahren kann durch Zugabe des Kondensationsproduktes der Komponente a) zu den Häuten oder Fellen, insbesondere Blößenmaterial, auf einen pH-Wert von 6,5 - 8,5, bevorzugt auf einen pH-Wert von 7 - 8, eingestellt werden.

Der pH-Wert in dem erfindungsgemäßen Verfahren kann auch vor, während und nach der Zugabe des Kondensationsproduktes der Komponente a) durch Zugabe von Puffersubstanzen, Säuren, Basen oder weiteren Zusätzen auf einen pH-Wert von 6,5 - 8,5, bevorzugt 7 - 8, eingestellt werden. Ein bevorzugter Zusatz zur Einstellung des pH-Wertes ist Ammoniumsulfat.

Bevorzugt wird der pH-Wert in dem erfindungsgemäßen Verfahren durch Zugabe des Kondensationsproduktes der Komponente a) auf einen pH-Wert von 6,5 - 8,5, bevorzugt 7 - 8, eingestellt.

In dieser bevorzugten Ausführungsform des erfindungsgemäßen Verfahrens bedarf es keiner Korrektur des pH-Wertes durch weitere Zusätze.

### Komponente a)

Erfindungsgemäß sind die Struktureinheiten des Kondensationsproduktes der Komponente a) abgeleitet von Phenolsulfonsäure, Dihydroxydiphenylsulfon und Formaldehyd.

In einer bevorzugten Ausführungsform sind die Struktureinheiten des Kondensationsproduktes der Komponente a) abgeleitet von Phenolsulfonsäure, 4,4'- und/ oder 2,4'-Dihydroxydiphenylsulfon, besonders bevorzugt 4,4'- und 2,4'-Dihydroxydiphenylsulfon, und Formaldehyd.

Bevorzugt liegen die Struktureinheiten des Kondensationsproduktes der Komponente a), abgeleitet von Phenolsulfonsäure, Dihydroxydiphenylsulfon und Formaldehyd, in einem Verhältnis von 1 : (1-10): (1,4-7,7), bevorzugt 1: (1-5): (1,4-4,2), besonders bevorzugt 1 : (2-4) : (2,1-3,5), vor.

Bevorzugt werden Kondensationsprodukte der Komponente a) durch Polykondensation von Phenolsulfonsäure, Dihydroxydiphenylsulfon und Formaldehyd in Anwesenheit von Natronlauge hergestellt.

Des Weiteren ist es auch möglich, nach der Kondensationsreaktion ein Reduktionsmittel wie Natriumhydroxymethansulfinat zu der Reaktionsmischung zuzufügen, das in der Folge auch in dem Kondensationsprodukt der Komponente a) enthalten ist.

In einer alternativen Ausführungsform wird unter dem Kondensationsationsprodukt der Komponente a) verstanden, dass es neben dem Kondensationsprodukt, dessen Struktureinheiten abgeleitet sind von Phenolsulfonsäure, Dihydroxydiphenylsulfon und Formaldehyd, auch Natriumhydroxymethansulfinat enthält. Natriumhydroxymethansulfinat ist handelsüblich zum Beispiel unter der Bezeichnung Rongalit C^{®} von der BASF erhältlich.

Das Kondensationsprodukt der Komponente a) kann nach seiner Herstellung in einer wässrigen Lösung vorliegen. Diese Lösung kann in dem erfindungsgemäßen Verfahren direkt zu der Haut oder dem Fell, insbesondere dem Blößenmaterial, gegeben werden.

Alternativ ist es auch möglich, eine Sprühtrocknung an das oben beschriebene Herstellungsverfahren des Kondensationsproduktes der Komponente a) anzuschließen, und das Kondensationsprodukt der Komponente a) als Feststoff, bevorzugt als pulverförmigen Feststoff, zu erhalten.

In dem erfindungsgemäßen Verfahren kann das Kondensationsprodukt der Komponente a) als Feststoff oder enthaltend in einer wässrigen Lösung eingesetzt werden.

Bevorzugt wird das Kondensationsprodukt der Komponente a) in einer wässrigen Lösung in dem erfindungsgemäßen Verfahren eingesetzt.

Die wässrige Lösung des Kondensationsproduktes der Komponente a) kann weiter organische Zusatzstoffe enthalten. Geeignete organische Zusatzstoffe sind solche, die in Wasser löslich sind, beispielsweise Ethylenglykol, Diethylenglykol, Triethylenglykol, Tetraethylenglykol sowie auf Ethylenoxid bzw. auf Ethylenoxid und Propylenoxid basierende Polyether wie alpha,omega-Dihydroxy-poly(oxyethylen) oder alpha,omega-Dihydroxypoly(oxyethylen-co-oxypropylen) mit einer Molmasse von 200 bis 10000 g/mol, Pyrrolidinon, N-(C₁-C₃)alkyl-pyrrolidinon, Aceton, aliphatische Alkohole wie Ethanol, Propanol, Isopropanol und Diethanolamin.

Die wässrige Lösung des Kondensationsproduktes der Komponente a) weist bevorzugt einen Feststoffgehalt von 5-50 Gew.-%, besonders bevorzugt 8-35 Gew.-%, ganz besonders bevorzugt von 15-30 Gew.-% (Gewichtsprozent) auf, wobei die Gew.-% bezogen sind auf das Gewicht der wässrigen Lösung.

Unter Feststoffgehalt der wässrigen Lösung des Kondensationsproduktes der Komponente a) wird der Gehalt an Feststoff verstanden, der vorliegt, wenn der wässrigen Lösung des Kondensationsproduktes der Komponente a) das Wasser entzogen wurde. Dies kann beispielsweise mittels Spühtrocknung erfolgen.

Wenn das Kondensationsprodukt der Komponente a) in einer wässrigen Lösung im erfindungsgemäßen Verfahren eingesetzt wird, wird sie bevorzugt in einer Menge von 10-100 Gew.-%, besonders bevorzugt 15 bis 50 Gew.-%, ganz besonders bevorzugt 20-30 Gew.-%, bezogen auf das Blößengewicht, eingesetzt.

In einer weiteren bevorzugten Ausführungsform des erfindungsgemäßen Verfahrens wird das Kondensationsprodukt der Komponente a) als Feststoff zugefügt.

Bevorzugt wird des Kondensationsprodukt der Komponente a) in dem erfindungsgemäßen Verfahren in einer Menge von 2 bis 8 Gew.-%, besonders bevorzugt 3 bis 6 Gew.-%, bezogen auf Blößengewicht, zugefügt.

In einer bevorzugten Ausführungsform wird ein Salz des Kondensationsproduktes der Komponente a) in dem erfindungsgemäßen Verfahren eingesetzt, besonders bevorzugt ein Alkalisalz, ganz besonders bevorzugt ein Natriumsalz.

### Komponente b)

Zusätzlich zu dem Kondensationsprodukt der Komponente a) kann in dem erfindungsgemäßen Verfahren zur Herstellung von Leder- oder Pelz-Halbfabrikaten wenigstens ein organisches Gerbhilfsmittel der Komponente b), das von dem Kondensationsprodukt der Komponente a) verschieden ist, zugegen sein oder nicht zugegen sein.

"Organisches Gerbhilfsmittel" bedeutet im Rahmen dieser Anmeldung, dass dieser Stoff, der für sich betrachtet ein organischer Gerbstoff ist, im Rahmen dieser Anmeldung vor, zusammen mit oder nach dem Kondensationsprodukt der Komponente a) im erfindungsgemäßen Verfahren eingesetzt wird.

Das wenigstens eine organische Gerbhilfsmittel der Komponente b) ist bevorzugt ausgewählt aus der Gruppe bestehend aus b1) wenigstens einer Carbamoylsulfonatgruppen-haltigen Verbindung, b2) Syntanen, b3) Harzgerbstoffen und b4) vegetabilen Gerbstoffen.

Besonders bevorzugt ist das wenigstens eine organische Gerbhilfsmittel der Komponente b) wenigstens eine Carbamoylsulfonatgruppen-haltige Verbindung der Komponente b1).

In einer bevorzugten Ausführungsform des erfindungsgemäßen Verfahrens liegen das Kondensationsprodukt der Komponente a) und das wenigstens eine organische Gerbhilfsmittel der Komponente b) in einem Verhältnis von 99 : 1 bis 50 : 50 , bevorzugt in einem Verhältnis von 95 : 5 bis 70 : 30 vor.

### Komponente b1)

Unter Carbamoylsulfonatgruppen-haltige Verbindung der Komponente b1) werden im Rahmen dieser Anmeldung Verbindungen mit folgender Struktureinheit verstanden:

-NH-CO-SO₃-K⁺

worin K⁺ ein Kationenäquivalent ist.

Als Carbamoylsulfonatgruppen-haltige Verbindungen der Komponente b1) kommen vorzugsweise Umsetzungsprodukte aus wenigstens einem organischen Polyisocyanat und wenigstens einem Bisulfit und/oder Disulfit in Frage.

Dabei kommen als organische Polyisocyanate insbesondere aliphatische, cycloaliphatische, araliphatische, aromatische oder heterocyclische Polyisocyanate in Betracht, wie sie z.B. von W. Siefken in Liebigs Annalen der Chemie 562, Seiten 75 bis 136 beschrieben werden.

Bevorzugt sind organische Polyisocyanate mit einer NCO-Funktionalität von 1,8 bis 4,2 mit einer Molmasse von vorzugsweise unter 800 g/mol, insbesondere organische Polyisocyanate mit einer NCO-Funktionalität von 1,8 bis 2,5 und einer Molmasse unter 400 g/mol.

Besonders bevorzugte Polyisocyanate sind solche mit einem Molekulargewicht von weniger als 400 g/mol mit an Aliphaten oder Cycloaliphaten gebundenen NCO-Gruppen, wie z.B. 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan (TMHI), 1,3- und 1,4-Diisocyanatohexan, 1,3- und 1,4-diisocyanato-cyclohexan (CHDI) sowie beliebige Gemische dieser Isomeren, 1-Isocyanato-2-isocyanatomethyl-cyclopentan, 1,2-, 1,3- und 1,4- Bis(isocyanatomethyl)-cyclohexan sowie beliebige Gemische von Isomeren, 1,2-, 1,3- und 1,4-Bis(isocyanatoethyl)-cyclohexan sowie beliebige Gemische dieser Isomeren, 1,2-, 1,3- und 1,4- Bis(isocyanato-n-propyl)-cyclohexan sowie beliebige Gemische dieser Isomeren, 1-Isocyanatopropyl-4-isocyanatomethyl-cyclohexan und Isomere,1-Isocyanato-3,3,5-trimethyl-5-isocyanatomethyl-cyclohexan (IPDI), 1-Isocyanato-1-methyl-4-isocyanatomethyl-cyclohexan (IMCI), 2,4'- und 4,4'-Diisocyanatodicyclohexyl-methan (H₁₂MDI) und Isomere, Dimeryl-diisocyanat (DDI), Bis(isocyanatomethyl)-bicyclo[2.2.1]heptan (NBDI), Bis(isocyanatomethyl)-tricyclo[5.2.1.0^{2,6}]decan (TCDDI) und Isomere und beliebige Gemische solcher Diisocyanate. Auch araliphatische Polyisocyanate wie die Xylylendiisocyanate der Formeln 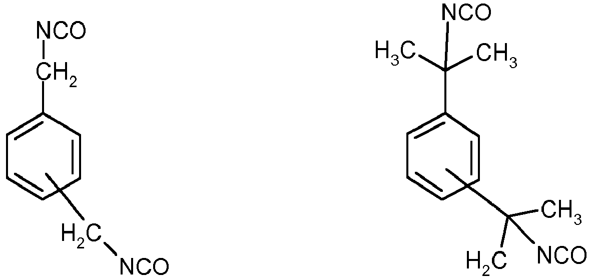 können verwendet werden.

Ganz besonders bevorzugt ist 1,6-Diisocyanatohexan (HDI).

### Komponente b2)

Unter Syntanen der Komponente b2) werden im Rahmen dieser Anmeldung Kondensationsprodukte auf Basis von
A) Sulfonsäuregruppen und/ oder Carboxylgruppen- enthaltende Aromaten,
B) Aldehyden und/oder Ketonen und gegebenenfalls
C) einer oder mehreren Verbindungen, ausgewählt aus der Gruppe der nicht sulfonierten Aromaten, Harnstoff und Harnstoffderivaten,
verstanden, wobei die Syntane der Komponente b2) von dem Kondensationsprodukt der Komponente a) verschieden sind.

"Auf Basis von" bedeutet, dass das Kondensationsprodukt gegebenenfalls aus weiteren Reaktanden neben A, B und gegebenenfalls C hergestellt wurde. Vorzugsweise werden die Syntane der Komponente b2) im Rahmen dieser Anmeldung jedoch nur aus A, B und gegebenenfalls C hergestellt.

Unter Sulfonsäuregruppen-enthaltende Aromaten (sulfonierte Aromaten) der Komponente A) werden im Rahmen dieser Anmeldung auch sulfomethylierte Aromaten verstanden. Bevorzugte sulfonierte Aromaten sind beispielsweise Naphthalinsulfonsaeuren, Phenolsulfonsaeure, sulfonierte Ditolylether, Dihydroxydiphenylsulfon, sulfoniertes Diphenylmethan, sulfoniertes Diphenyl, sulfoniertes Terphenyl, Benzolsulfonsaeuren oder Toluolsufonsäure.

Bevorzugte Carboxylgruppen-enthaltende Aromaten der Komponente A) sind beispielsweise Naphthalin-carbonsäure, Naphthalin-dicarbonsäure, Naphthalin-tricarbonsäure, Naphthalintetracarbonsäure, Benzoesäure, Phthalsäure, Terepthalsäure, Hydroxybenzoesäure, Dihydroxybenzoesäure, Trihydroxybenzoesäure, Hydroxy-dicarboxybenzol, Hydroxytricarboxybenzol, Trimellitsäure, Pyromellitsäure, Carboxy-diphenylether, Dicarboxydiphenylether, Carboxy-phenyl-tolylether und Dihydroxy-diphenylether.

Bevorzugte Aldehyde und/oder Ketone der Komponente B) sind aliphatische, cycloaliphatische sowie aromatische Aldehyde und/oder Ketone. Besonders bevorzugt sind aliphatische Aldehyde, ganz besonders bevorzugt Formaldehyd sowie aliphatische Aldehyde mit 3 bis 5 C-Atomen.

Bevorzugte nicht sulfonierte Aromaten der Komponente C) sind Phenol, Kresol, Dihydroxy-diphenylether und Dihydroxydiphenylmethan.

Bevorzugte Harnstoffderivate der Komponente C) sind Dimethylolharnstoff, Melamin, Dicyandiamid und Guanidin.

Phenol und Phenolderivate wie beispielsweise Phenolsulfonsaeure werden vielfach auch durch gleichzeitiges Einwirken von Formaldehyd und Harnstoff oder durch Dimethylolharnstoff verknüpft (DE-A 1 113 457). Sulfonierungsprodukte aromatischer Verbindungen werden (laut Ullmanns Encyklopädie der technischen Chemie Band 16, 4. Auflage, Weinheim 1979, S.138) in der Regel, ohne die nicht-umgesetzten Ausgangsverbindungen abzutrennen, allein oder gemeinsam mit weiteren Ausgangsverbindungen mit Formaldehyd kondensiert. Eine die Löslichkeit fördernde Gruppe kann bei Phenolen auch durch Sulfomethylieren unter gleichzeitiger Einwirkung von Alkalihydrogensulfit und Formaldehyd zusammen mit der Kondensation eingeführt werden. Diese Sulfomethylierung ist z.B. in DE-A 848 823 beschrieben.

Weitere bevorzugte Kondensationsprodukte der Komponente b2) sind Kondensate, die aus Ditolylethersulfonsäure, 4,4'-Dihydroxydiphenylsulfon und/oder 2,4'-Dihydroxydiphenylsulfon und deren Isomeren, Phenolsulfonsäure, Phenol, und gegebenenfalls Harnstoff mit Formaldehyd aufgebaut sind.

Besonders bevorzugte Kondensationsprodukte sind solche, die durch Kondensation von Sulfonsäuregruppen enthaltenden und gegebenenfalls nicht sulfonierten Aromaten mit aliphatischen Aldehyden, vorzugsweise Formaldehyd erhalten, werden.

Solche Kondensationsprodukte werden vorzugsweise durch Kondensation von sulfoniertem Naphthalin und sulfoniertem Phenol oder Dihydroxydiphenylsulfon und deren Isomeren mit Formaldehyd oder durch Kondensation von Naphthalinsulfonsäure und Formaldehyd oder durch Kondensation von sulfoniertem Ditolylether, sulfoniertem Phenol mit Formaldehyd oder durch Kondensation von sulfoniertem Phenol, Harnstoff, Phenol mit Formaldehyd oder durch Kondensation von sulfoniertem Phenol, Harnstoff, Phenol, sulfoniertem Ditolylether mit Formaldehyd erhalten.

Das bei der Kondensation bevorzugt erhaltene Kondensationsprodukt besitzt vorzugsweise einen mittleren Kondensationsgrad von 1 bis 150, vorzugsweise von 1 bis 20, insbesondere von 1 bis 5.

Weiter bevorzugte Kondensationsprodukte der Komponente b2) sind Produkte basierend auf der Kondensation von Naphthalinsulfonsäuren, Ditolylethersulfonsäuren, Phenolsulfonsäuren, Dihydroxy-diphenylsulfon und Phenol sowie Kombinationen aus diesen Rohstoffen mit Formaldehyd oder Glutardialdehyd und gegebenenfalls Harnstoff oder Harnstoffderivaten.

Ebenfalls geeignete Syntane der Komponente b2) sind Polykondensate auf Basis von Dihydroxydiphenylsulfon / Naphthalinsulfonsäure und Formaldehyd, Dihydroxy-diphenylsulfon / Ditolylethersulfonsäure und Formaldehyd, Dihydroxydiphenylsulfon / Phenolsulfonsäure / Ditolylethersulfonsäure / Harnstoff und Formaldehyd, sulfomethyliertem Dihydroxydiphenylsulfon / Harnstoff und Aldehyden, vorzugsweise Formaldehyd, sowie sulfomethyliertem Dihydroxydiphenylsulfon / Phenol / Harnstoff oder Harnstoffderivaten und Aldehyden, vorzugsweise Formaldehyd, sowie Mischungen daraus (handelsübliche Gerbstoffe wie beispielsweise TANIGAN® BN, TANIGAN® PR, TANIGAN® 3LN, TANIGAN® HO, TANIGAN® UW, von LANXESS, oder Mischungen daraus).

### Komponente b3)

Unter Harzgerbstoffen der Komponente b3) werden im Rahmen dieser Anmeldung Kondensationsprodukte auf Basis von
i) Aldehyden, wobei der Aldehyd ausgewählt ist aus der Gruppe der Di-aldehyde der Gruppe C₂ bis C₁₂, und
ii) wenigstens einer NH₂-Gruppen tragenden Verbindung
verstanden, wobei die Kondensationsprodukte Säuregruppen enthalten und unter Säuregruppe Sulfon- und/oder Carbonsäuregruppen sowie deren Salze verstanden werden.

"Auf Basis von" bedeutet, dass der Harzgerbstoff der Komponente b3) gegebenenfalls aus weiteren Reaktanden neben i), ii) und gegebenenfalls iii) Säuregruppen-einführenden Reaktanden hergestellt wird.

Bevorzugte Dialdehyde der Komponente i) sind aliphatische oder aromatische C₂-C₁₂-Dialdehyde. Besonders bevorzugt sind aliphatische C₂-C₁₂-Dialdehyde, ganz besonders bevorzugt C₂-C₈-Dialdehyde. Ganz ganz besonders bevorzugt ist der Aldehyd der Komponente i) eine oder mehrere Verbindungen ausgewählt aus der Gruppe bestehend aus Glyoxal, Butandialdehyd, Butendialdehyd, Glutardialdehyd, Adipaldehyd und Octandialdehyd.

Am meisten bevorzugt ist Glutardialdehyd.

Bevorzugte NH₂-Gruppen tragende Verbindungen der Komponente ii) sind primäre Amine und/oder -Amide. Besonders bevorzugt sind aliphatische oder aromatische C₁-C₁₀-Amine und/oder -Amide. Ganz besonders bevorzugt ist die NH₂-Gruppen tragende Verbindung ausgewählt aus der Gruppe bestehend aus Cyanamid, Harnstoff, Melamin, Urotropin, Guanidin, Formoguanamin, Benzoguanamin, Acetoguanamin, Caprinoguanamin, Isobutyroguanamin, Acrylamid, Benzamid, Dicyandiamid (Cyanoguanidin) und Mischungen davon.

Ganz besonders bevorzugt ist die wenigstens eine NH₂-Gruppen tragende Verbindung Melamin oder eine Mischung aus Melamin und Harnstoff.

Bevorzugte Salze der Säuregruppen des Kondensationsproduktes sind Alkali-, Erdalkali- und Ammoniumsalze, besonders bevorzugt Natrium- und Kalium-Salze.

Bevorzugte Säuregruppen sind Sulfonsäuregruppen oder ihre Salze.

### Komponente b4)

Unter vegetabilen Gerbstoffen der Komponente b4) werden im Rahmen dieser Anmeldung beispielsweise aus pflanzlichen Quellen gewonnene Gerbstoffe aus den Klassen der kondensierten Gerbstoffe bzw. hydrolysierbaren Gerbstoffe verstanden, z. B. Kastanienextrakt, Mimosa, Tara oder Quebracho. Als vegetabile Gerbstoffe kommen auch solche in Betracht, die aus pflanzlichen Quellen wie Algen, Früchten, z.B. Rhabarber, Oliven, Pflanzenteilen wie Blättern, Baumrinden, Wurzeln, Hölzern ggf. nach einer chemischen bzw. enzymatischen Modifizierung und/oder durch extraktive Methoden erhalten werden können.

### Zusatzstoffe

Die nachfolgend aufgeführten Zusatzstoffe sind bevorzugte Zusatzstoffe, auf die die möglichen Zusatzstoffe in dem erfindungsgemäßen Verfahren jedoch nicht beschränkt werden sollen.

### Komponente c)

Zusätzlich zu dem Kondensationsprodukt der Komponente a) kann in dem erfindungsgemäßen Verfahren zur Herstellung von Leder- oder Pelz-Halbfabrikaten wenigstens ein Zusatzstoff der Komponente c), der von dem Kondensationsprodukt der Komponente a) verschieden ist und der wenigstens ein Emulgator oder dessen Salz ist, zugegen sein oder nicht zugegen sein.

In einer bevorzugten Ausführungsform des erfindungsgemäßen Verfahrens zur Herstellung von Leder- oder Pelz-Halbfabrikaten ist zusätzlich zu dem Kondensationsprodukt der Komponente a) wenigstens ein organisches Gerbhilfsmittel der Komponente b), das von dem Kondensationsprodukt der Komponente a) verschieden ist, sowie wenigstens ein Zusatzstoff der Komponente c), der wenigstens ein Emulgator oder dessen Salz ist, zugegen.

Als Emulgatoren kommen beispielsweise kationische, anionische, amphotere und nichtionische Tenside in Betracht, die vorzugsweise in der Lage sind, die Grenzflächenspannung zwischen einer organischen und einer wässrigen Phase so zu vermindern, dass sich eine Öl-in-Wasser-Emulsion bilden kann.

Bevorzugte kationische Emulgatoren sind quartäre Ammonium-Verbindungen, zum Beispiel Cetyltrimethylammoniumbromid oder -chlorid oder Benzyllauryldimethylammoniumchlorid.

Bevorzugte anionische Emulgatoren sind Seifen, Metallseifen, organische Seifen wie Mono-, Di- oder Triethanolaminoleat, -stearat, Diethylethanolaminoleat, -stearat oder 2-Amino-2-methylpropan-1-olstearat, sulfonierte Verbindungen wie Natriumdodecylsulfat oder Türkischrotöl und sulfonierte Verbindungen wie Natriumcetylsulfonat.

Bevorzugte amphotere Emulgatoren sind Phosphatide wie Lecithine, verschiedene Proteine wie Gelatine oder Casein und die eigentlichen Amphotenside.

Bevorzugte nichtionische Emulgatoren sind Fettalkohole wie Lauryl-, Cetyl-, Stearyl- oder Palmitylalkohol, partielle Fettsäureester mehrwertiger Alkohole mit gesättigten Fettsäuren wie Glycerolmonostearat, Pentaerythritolmonostearat, Ethylenglycolmonostearat, oder Propylenglycolmonostearat, partielle Fettsäureester mehrwertiger Alkohole mit ungesättigten Fettsäuren wie Glycerolmonooleat, Pentaerythritolmonooleat, ferner Polyoxyethylenester von Fettsäuren wie Polyoxyethylenstearat, Polymerisationsprodukte aus Ethylenoxid und Propylenoxid an Fettalkoholen wie Fettalkoholpolyglycolether oder Fettsäuren wie Fettsäureethoxylate.

Besonders bevorzugte nichtionische Emulgatoren sind wenigstens ein nicht-ionisches, Estergruppen-haltiges, alkoxyliertes Polyol mit einem HLB-Wert von wenigstens 13 (c1) und/oder ein Alkylglycosid (c2) und /oder ein nichtionischer Estergruppen-freier alkoxylierter Alkohol (c3).

### Komponente c1)

Die bevorzugten nicht-ionischen, Estergruppen-haltigen, alkoxylierten Polyole der Komponente c1) weisen einen HLB-Wert von 13 bis 19, insbesondere von 14 bis 18 auf, wobei der HLB-Wert bestimmt wird nach der Methode nach Griffin, W. C.: Classification of surface active agents by HLB, J. Soc. Cosmet. Chem. 1, 1949. Bevorzugte Verbindungen der Komponente (c1) weisen zudem eine Wasserlöslichkeit bei 20 °C von wenigstens 10 g pro Liter, insbesondere wenigstens 20 g pro Liter auf.

Als bevorzugte Verbindungen der Komponente c1) sind solche geeignet, die in an sich bekannter Weise aus Polyolen durch Alkoxylierung und partielle Veresterung der Hydroxylgruppen mit einer Carbonsäure erhältlich sind. Als geeignete Ausgangspolyole können beispielsweise mehrwertige (cyclo)aliphatische Alkohole wie Glycerin, Trimethylolpropan, Pentaerythrit, Dipentaerythrit, von Mono- oder Polysacchariden abgeleitete Polyole, vorzugsweise des Molekulargewichts von 92 bis 2000 als Startermoleküle eingesetzt werden. Besonders bevorzugte Starteralkohole sind Polyole mit 3 bis 10 Hydroxylgruppen, insbesondere Glycerin und solche mit Sorbitan-Grundgerüst, insbesondere von 1,4- oder 1,5-Sorbitan, bevorzugt von 1,4-Sorbitan.

Bevorzugte wässrige Zusammensetzungen sind dadurch gekennzeichnet, dass es sich bei der Verbindung der Komponente c1) um das Reaktionsprodukt eines Polyols mit wenigstens einem Alkylenoxid mit 2 bis 6 Kohlenstoffatomen, vorzugsweise in einer Menge von 10 bis 60 Mol-Äquivalenten, bezogen auf das Polyol und anschließender Umsetzung mit wenigstens einer Carbonsäure mit 6 bis 30 C-Atomen handelt. Bei dem eingesetzten Polyol handelt es sich vorzugsweise um ein Polyol aus der Gruppe bestehend aus Glycerin, Trimethylolpropan, Pentaerythrit, Dipentaerythrit, und von Mono- und Polysacchariden abgeleitete Polyole, insbesondere Sorbit und Polyole mit Sorbitan-Grundgerüst.

Besonders bevorzugt handelt es sich bei den Verbindungen der Komponente c1) um partiell veresterte Sorbitan-Alkoxylate, deren Hydroxylgruppen vor oder vorzugsweise nach der Alkoxylierung mit Carbonsäuren mit einer Kettenlänge von 6 bis 30 Kohlenstoffatomen verestert sind, wobei jede Hydroxylgruppe des Grundpolyols eine voneinander unabhängige Anzahl von Alkoxy-Einheiten aufweisen kann und pro Sorbitan-Einheit im Mittel 10 bis 60 Alkoxy-Einheiten vorhanden sind. Die bevorzugten veresterten Sorbitan-Alkoxylate weisen eine statistische Verteilung der Alkoxygruppen auf.

Bevorzugt werden partiell veresterte alkoxylierte Sorbitan-Derivate durch Umsetzung von einem Sorbitan der Formel

X-(OH)m

worin
X ein Sorbitanrest, insbesondere ein 1,4-Sorbitanrest ist und
m für die Zahl 4 steht
mit
   10 bis 60 Äquivalenten, pro Mol Sorbitan, bevorzugt 10 bis 40, besonders bevorzugt 10 bis 30 und ganz besonders bevorzugt 15 bis 25 Äquivalenten gleicher oder verschiedener C2-C6-Alkylenoxide, insbesondere C2- und/oder C3-Alkylenoxide, vorzugsweise Ethylenoxid und mit
   1 bis 3, vorzugsweise 0,8 bis 1,2 Äquivalenten, bezogen auf das Sorbitan, einer aliphatischen, ggf. ungesättigten Carbonsäure, vorzugsweise mit einer Kettenlänge von 6 bis 30 Kohlenstoffatomen, die unsubstituiert oder durch Hydroxygruppen substituiert ist, vorzugsweise geradkettig ist, in beliebiger Reihenfolge hergestellt. Bevorzugt erfolgt zuerst die Umsetzung mit dem Alkylenoxid und anschließend die Reaktion mit der Carbonsäure.

Bevorzugt sind Sorbitanpolyoxyethylenmonoester, welche mit 10-60 mol Ethylenoxid-Einheiten pro Sorbitan-Einheit alkoxyliert sind, und vorzugsweise ein 1,4-Sorbitan-Grundgerüst aufweisen.

Diese entsprechen vorzugsweise den folgenden Strukturformeln, 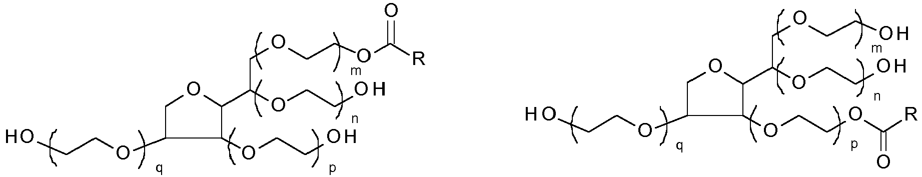 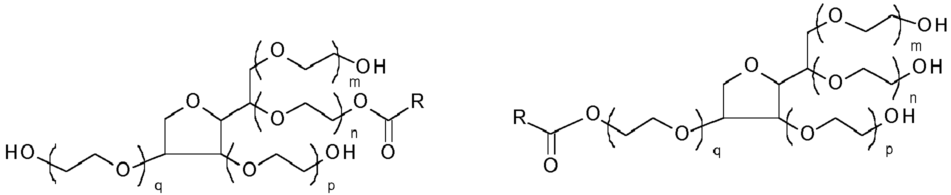 in denen
R für einen ggf. durch Hydroxylgruppen substituierten Alkyl- oder Alkenylrest der Carbonsäure steht und m, n, p und q unabhängig voneinander sind, statistische Werte sind und jeweils für eine Zahl von 0 bis 60 stehen, mit der Maßgabe, dass die Summe der Anzahl der Oxyethylen-Einheiten m+n+p+q von 10 bis 60, vorzugsweise 18 bis 22, insbesondere 20 ist.

Ebenfalls sind auch entsprechende alkoxylierte Sorbitandiester sowie deren Gemische geeignet.

Weiterhin sind alkoxylierte Sorbitanester geeignet, bei denen eine Hydroxylgruppe der Sorbitan-Einheit, insbesondere in den oben angegebenen Formeln direkt mit der Carbonsäure verestert ist, d.h. bei der sich keine Alkylenoxid-Einheit zwischen der Sorbitan-Einheit und dem Carbonsäurerest befindet und die drei nicht acylierten Hydroxylgruppen mit einer entsprechend höheren Anzahl an Alkylenoxid-Einheiten verethert sind. Solche Verbindungen sind beispielsweise dadurch zugänglich, dass man das Sorbitan zunächst mit einer Carbonsäure verestert und das erhaltene Produkt, bestehend aus einer Mischung der isomeren Monoester, die bei einem Überschuss an Carbonsäure außerdem Gemische der isomeren Diester enthalten kann, anschließend alkoxyliert.

Das zur Alkoxylierung des Sorbitans eingesetzte Alkylenoxid ist bevorzugt ausgewählt aus der Gruppe bestehend aus Ethylenoxid, Propylenoxid und Butylenoxid. Dabei ist es auch möglich, dass das Sorbitan mit verschiedenen der genannten Alkylenoxide, z.B. Ethylenoxid und Propylenoxid, umgesetzt wird, wobei Sorbitan -Alkoxylate erhalten werden können, die jeweils Blöcke aus mehreren Einheiten eines Alkylenoxids, z.B. Ethylenoxid, neben Blöcken aus mehreren Einheiten eines anderen Alkylenoxids, z.B. Propylenoxid, aufweisen. Besonders bevorzugt enthalten die Sorbitan-Alkoxylate Ethylenoxid (EO)-Einheiten, vorzugsweise ausschließlich. In einem solchen Fall ist das eingesetzte Alkylenoxid besonders bevorzugt Ethylenoxid.

Des Weiteren ist es möglich, bei der Umsetzung eines Sorbitans mit verschiedenen der genannten Alkylenoxide, z.B. Ethylenoxid und Propylenoxid, Sorbitan-Alkoxylate zu erhalten, in denen der Einbau der verschiedenen Alkylenoxide statistisch erfolgt. Die Einsatzmengen an Alkylenoxid betragen vorzugsweise 10 bis 60 Mol Alkylenoxid pro Mol Sorbitan, bevorzugt 10 bis 40 Mol, besonders bevorzugt 10 bis 30 Mol und ganz besonders bevorzugt 15 bis 25 Mol. Ein bevorzugtes Alkylenoxid ist Ethylenoxid.

Die zur Veresterung des Ausgangspolyols, besonders des Sorbitan-Alkoxylats geeigneten Carbonsäuren sind vorzugsweise gesättigt oder ungesättigt und linear oder verzweigt und können ggf. durch Hydroxylgruppen substituiert sein. Beispielsweise seien folgende Carbonsäuren genannt: Hexansäure, Heptansäure, Octansäure, Nonansäure, Decansäure, Undecansäure, Dodecansäure, Tridecansäure, Tetradecansäure, Pentadecansäure, Hexadecansäure. Heptadecansäure. Octadecansäure. Nonadecansäure. Eicosansäure. Octadecensäure (Ölsäure), Undecensäure. Besonders bevorzugt sind Decansäure, Undecansäure, Dodecansäure (Laurinsäure), Tetradecansäure, Hexadecansäure (Palmitinsäure) und Octadecansäure (Stearinsäure), Ricinolsäure. Ganz besonders bevorzugt sind Dodecansäure (Laurinsäure), Hexadecansäure (Palmitinsäure) und Octadecansäure (Stearinsäure) und Octadecensäure (Ölsäure).

Als Verbindungen der Komponente c1) können bspw. handelsübliche Produkte eingesetzt werden, wie bspw. Sorbitan-polyoxyethylen-(20)-monolaurat (beispielsweise Polysorbat® 20 oder Tween® 20 (Croda Oleochemicals) oder Eumulgin® SML 20 (Cognis)), Sorbitan polyoxyethylen (20) monopalmitat (beispielsweise Polysorbat® 40 oder Tween® 40 (Croda Oleochemicals)), Sorbitan polyoxyethylen (20) monostearat (beispielsweise Polysorbat® 60 oder Tween® 60 (Croda Oleochemicals) oder Eumulgin® SMS 20 (Cognis)), Sorbitan polyoxyethylen (20) monooleat (beispielsweise Polysorbat® 80 oder Tween® 80 (Croda Oleochemicals)).

Weitere bevorzugte Verbindungen der Komponente c1) sind beispielsweise Alkoxylate von Mono- und Polyglycerinestern. Die Herstellung solcher alkoxylierter (Poly)glycerinester erfolgt entweder durch Alkoxylierung von Glycerin oder eines Polyglycerins und anschließende Veresterung mit einer Fettsäure oder durch Veresterung des Glycerins oder Polyglycerins mit einer Fettsäure und anschließende Alkoxylierung. Für die erfindungsgemäßen Zusammensetzungen sind insbesondere Alkoxylate von Mono- und Polyglycerinestern geeignet, die einen HLB-Wert von wenigstens 13 aufweisen und vorzugsweise eine Wasserlöslichkeit bei 20 °C von mehr als 10 g pro Liter besitzen. Geeignet sind weiterhin alkoxylierte Glycerinester oder Polyglycerinester, die mit mehr als einer Carbonsäure verestert sind. Besonders bevorzugt sind alkoxylierte Monoglycerin-Monoester.

Zur Alkoxylierung geeignet sind C₂ bis C₆-Alkylenoxide, besonders bevorzugt Ethylenoxid, Bevorzugt ist eine Alkoxylierung mit 10 bis 100 Alkylenoxideinheiten, insbesondere mit 20 bis 60 Alkylenoxid-Einheiten. Die Hydroxylgruppen des Glycerins oder des Polyglycerins weisen unabhängig voneinander im Mittel eine unterschiedliche Anzahl von Alkylenoxid-Einheiten auf.

Beispielsweise seien als besonders geeignete Alkoxylate von Mono- und Polyglycerinestern. genannt: Glycerinmonostearat-Ethoxylate mit im Mittel 15 bis 30, insbesondere mit im Mittel 20 EO-Einheiten, Glycerinmonooleat-Ethoxylate mit 20 bis 40 EO-Einheiten, Diglycerinmonostearat mit 20 bis 40 EO-Einheiten, Polyglycerin-monostearat mit 20 bis 40 EO-Einheiten, Ricinusöl-Alkoxylate und hydrierte Ricinusöl-Alkoxylate, kurz (hydrierte) Ricinusöl-Alkoxylate. Es handelt sich bei letzteren um Produkte, die durch Alkoxylierung von Ricinusöl oder hydriertem Ricinusöl mit Alkylenoxiden, insbesondere Ethylenoxid und Propylenoxid, erhältlich sind, bevorzugt sind solche, die 20 bis 100 Alkylenoxid-Einheiten pro (hydrierte) Ricinusöl-Einheit, bevorzugt 20 bis 60 Ethylenoxid-Einheiten pro (hydrierte) Ricinusöl-Einheit aufweisen.

Entsprechende Glycerin-basierte Verbindungen der Komponenten c1) sind ebenfalls als Handelsprodukte verfügbar, beispielsweise Glycerinmonostearat-Ethoxylat mit im Mittel 20 EO-Einheiten als Cutina® E 24 (Cognis), hydriertes Ricinusöl Ethoxylat mit im Mittel 40 EO-Einheiten als Eumulgin® HRE 40 (Cognis).

### Komponente c2)

Als bevorzugte Verbindungen der Komponente c2) sind beispielsweise Alkylmonoglykoside, Alkyldiglykoside, Alkyltriglykoside und höhere Homologe, hier allgemein als Alkylglykoside bezeichnet, insbesondere Monoglucoside, Diglucoside, Triglucoside, oder höhere Homologe und deren Gemische, zu nennen, deren Hydroxylgruppen partiell mit C₆-C₁₈-Alkylgruppen substituiert sind. Bevorzugt sind Mischungen aus Mono-, Di-, Triglucosiden und höheren Homologen mit C₆-C₁₈-Alkylgruppen, und einem Polymerisationsgrad (DP) von 1 bis 5. Besonders bevorzugt sind Alkylglucoside, deren Alkylgruppen eine Kettenlänge von 6 bis 18 C-Atomen, insbesondere 6 bis 12 C-Atomen, aufweisen. Weiterhin bevorzugt sind Alkylglucoside, deren Alkylgruppen eine Kettenlängenverteilung aufweisen oder Mischungen von Alkylglucosiden mit unterschiedlichen Alkylketten darstellen.

Weitere bevorzugte Verbindungen der Komponente c2) sind in der Anmeldung WO 2012136565 A1 auf S. 17, Z. 29 - S. 20, Z. 2 beschrieben.

### Komponente c3)

Als bevorzugte nichtionische, Estergruppen-freie Alkoholalkoxylate der Komponente c3) sind Polyetheralkohole geeignet, die in an sich bekannter Weise durch Alkoxylierung geeigneter Startermoleküle zugänglich sind. Solche sind beispielsweise aus EP-A-1647563 bekannt. Zur Herstellung der Polyetheralkohole können beliebige ein- oder mehrwertige Alkohole des Molekulargewichts 88 bis 438 als Startermoleküle eingesetzt werden.

Besonders bevorzugt handelt es sich dabei um Alkoxylate aliphatischer Alkohole mit einer Kettenlänge von 5 bis 30 Kohlenstoffatomen und 1 bis 25 Alkoxy-Einheiten.

Bevorzugt werden lineare oder verzweigte, gesättigte oder ungesättigte Alkoholalkoxylate eingesetzt, die durch Umsetzung mindestens eines Alkohols ROH mit n Mol mindestens eines Alkylenoxids pro Mol Alkohol ROH erhalten werden,

### worin

R ein Alkylrest mit 5 bis 30 Kohlenstoffatomen ist, der eine Hauptkette mit 4 bis 29 Kohlenstoffatomen aufweist, die in der Kettenmitte mit mindestens einem C₁- bis C₁₀-Alkylrest verzweigt ist;
das Alkylenoxid 2 bis 6 Kohlenstoffatome aufweist
und
der n ein Wert von 1 bis 25 ist.

Weitere bevorzugte Verbindungen der Komponente c3) sind in der Anmeldung WO 2012136565 A1 auf S. 20, Z. 3 -S. 22, Z. 5 beschrieben.

### Komponente d)

Zusätzlich zu dem Kondensationsprodukt der Komponente a) kann in dem erfindungsgemäßen Verfahren zur Herstellung von Leder- oder Pelz-Halbfabrikaten wenigstens ein Zusatzstoff der Komponente d), der von dem Kondensationsprodukt der Komponente a) verschieden ist und der der wenigstens eine Carbonsäure oder deren Salz ist, zugegen sein oder nicht zugegen sein.

Geeignete Verbindungen der Komponente d) sind insbesondere Mono- oder Polycarbonsäuren, vorzugsweise Hydroxypolycarbonsäuren. Beispielsweise seien genannt: Ameisensäure, Essigsäure, Oxalsäure, Glyoxylsäure, Malonsäure, Milchsäure, Weinsäure, Maleinsäure, Glutarsäure, Phthalsäure, Adipinsäure, Äpfelsäure, Bernsteinsäure, Citronensäure, oder Polycarbonsäuren wie (Co)-Polymerisate von (Meth)acrylsäure, Maleinsäure, Crotonsäure oder Itaconsäure oder deren Derivaten mit ggf. weiteren Monomeren wie Ethen, Propen, Styrol, Hydroxyethylmethacrylat, Hydroxypropyl-methacrylat, Hydroxyethylacrylat, Hydroxypropylacrylat, 4-Hydroxybutylvinylether, insbesondere solche, die eine mittlere Molmasse (Gewichtsmittel MW) von 500 bis 100000 g/mol, insbesondere 500 bis 30000 g/mol aufweisen.

Besonders bevorzugt sind als Carbonsäure oder deren Salz der Komponente d) Oxalsäure, Bernsteinsäure, Glutarsäure oder Adipinsäure, insbesondere wenigstens eine Hydroxy-Polycarbonsäure, vorzugsweise Citronensäure, Weinsäure oder Milchsäure oder Gemische daraus.

### Komponente e)

Zusätzlich zu dem Kondensationsprodukt der Komponente a) kann in dem erfindungsgemäßen Verfahren zur Herstellung von Leder- oder Pelz-Halbfabrikaten wenigstens ein Zusatzstoff der Komponente e), der von dem Kondensationsprodukt der Komponente a) verschieden ist und der ausgewählt ist aus den Gruppen der Fettungsmittel, Füllstoffe und/oder Puffersubstanzen, zugegen sein oder nicht zugegen sein.

Fettungsmittel sind vorzugsweise Substanzen basierend auf biologischen, mineralen oder synthetischen Ölen, die zur Verbesserung der Einsetzbarkeit in Wasser mit hydrophilen Gruppen versehen werden können z. B. durch vollständige oder partielle Sulfatierung, Sulfitierung, Carboxylierung oder Phosphatierung.

Als Füllstoffe kommen bevorzugt inerte anorganische Salze sowie organische Polymere in Frage, z. B. Sulfate wie Natriumsulfat oder Calciumsulfat, Talkum, Siliciumoxid-Verbindungen, Stärke oder Ligninsulfonate.

Unter geeigneten Puffersubstanzen sind solche zu verstehen, die durch Zugabe in einer ausreichenden Menge einen pH-Bereich, insbesondere einen pH-Bereich von 1 bis 5, bevorzugt 2,0 bis 3,5 einzustellen und zu stabilisieren vermögen. Als geeignete Puffer hierfür kommen bevorzugt Mischungen aus Verbindungen der Komponente d) und deren Salzen in Frage. Als bevorzugte Salze kommen insbesondere Alkalisalze, vorzugsweise Natrium- oder Kaliumsalze in Frage.

Als bevorzugte Entstaubungsmittel sind beispielsweise Alkoxylate von aromatischen Verbindungen oder Polyether oder bestimmte Diester zu nennen. Beispielsweise seien konkret genannt: Ethoxylate, Propoxylate oder Mischpolyether auf Basis von EO/PO, wobei als aromatische Verbindungen Hydrochinon oder Phenol-Styrol erwähnt seien, Polyethylenglykol mit einer mittleren Molmasse von 100 bis 800, Polypropylengykol mit einer mittleren Molmasse von 100 bis 800, EO/PO-Mischpolyether mit einer mittleren Molmasse von 100 bis 800, Monoalkylether oder Dialkylether der oben genannten Polyether, wobei der Alkylrest 1 bis 4 C-Atome aufweisen kann. Geeignet sind auch Entstaubungsmittel auf Mineralöl-Basis. Entstaubungsmittel werden vorzugsweise in einer Menge von 0 bis 5,0, bevorzugt 0,1 bis 2,0%, bezogen auf das Kondensationsprodukt der Komponente a), eingesetzt.

Die Komponenten a) bis e) können getrennt oder als Mischung in dem erfindungsgemäßen Verfahren eingesetzt werden.

In einer bevorzugten Ausführungsform des erfindungsgemäßen Verfahrens wird das wenigstens eine Gerbhilfsmittel der Komponente b) mit wenigstens einer der Komponenten c) bis e) zu einem festen, partikulären Material umgesetzt, welches dann in dem erfindungsgemäßen Verfahren eingesetzt wird.

Besonders bevorzugt wird das feste, partikuläre Material enthaltend das wenigstens eine Gerbhilfsmittel der Komponente b) und wenigstens eine der Komponenten c) bis e) durch Spühtrocknung einer Mischung dieser Komponenten erhalten.

Weitere bevorzugte Merkmale des festen, partikulären Materials sowie seiner Herstellung sind in der Anmeldung WO 2012136565 A1 auf S. 2, Z. 30 - S. 3, Z. 13 sowie auf S. 25, Z. 12 - S. 33, Z. 12 beschrieben.

In einer weiteren Ausführungsform ist das erfindungsgemäße Verfahren dadurch gekennzeichnet, dass Häute oder Felle in Gegenwart folgender Komponenten behandelt werden, wobei die Angaben in Gew.-% auf die Summe der Komponenten a) bis e) bezogen sind:
- 50 bis 100 Gew.-% eines Kondensationsproduktes der Komponente a), dessen Struktureinheiten abgeleitet sind von Phenolsulfonsäure, Dihydroxydiphenylsulfon und Formaldehyd,
- 0 bis 50 Gew.-% wenigstens eines organischen Gerbhilfsmittels der Komponente b), bevorzugt einer Carbamoylsulfonatgruppen-haltigen Verbindung (b1),
- 0 bis 10 Gew.-%, bevorzugt 0 bis 5 Gew.-% wenigstens eines Zusatzstoffes der Komponente c), der wenigstens ein Emulgator oder dessen Salz ist, insbesondere wenigstens ein nicht-ionisches, Estergruppen-haltiges, alkoxyliertes Polyol mit einem HLB-Wert von wenigstens 13 (c1) und/oder ein Alkylglycosid (c2) und /oder ein nichtionischer Estergruppen-freier alkoxylierter Alkohol (c3),
- 0 bis 10 Gew.-%, bevorzugt 0 bis 5 Gew.-% wenigstens eines Zusatzstoffes der Komponente d), der wenigstens eine Carbonsäure oder deren Salz ist, bevorzugt Oxalsäure, Bernsteinsäure, Glutarsäure oder Adipinsäure, insbesondere wenigstens eine Hydroxy-Polycarbonsäure, vorzugsweise Citronensäure, Weinsäure oder Milchsäure oder Gemische daraus, und
- 0 bis 10 Gew.-%, bevorzugt 0 bis 5 Gew.-% wenigstens eines weiteren Zusatzstoffes der Komponente e), ausgewählt aus den Gruppen der Fettungsmittel, Füllstoffe und/oder Puffersubstanzen.

Die Erfindung betrifft weiterhin die nach dem erfindungsgemäßen Verfahren erhaltenen Leder- oder Pelz-Halbfabrikate, bevorzugt Wet White-Leder oder -Pelze.

Die Erfindung betrifft weiterhin ein Verfahren zur Herstellung von Ledern oder Pelzen unter Einsatz der Leder- oder Pelz-Halbfabrikate, die nach dem erfindungsgemäßen Verfahren zur Herstellung der Leder- oder Pelz-Halbfabrikate erhalten wurden.

Dieses zuvor genannte Verfahren beinhaltet weiter die für den Fachmann gängigen Schritte der Nachgerbung von Leder- bzw. Pelz-Halbfabrikaten mit weiteren Stoffen, die zur Optimierung der haptischen und optischen Eigenschaften, so zum Beispiel hinsichtlich Farbe, Fülle, Weichheit und Egalität, beitragen.

Die Erfindung betrifft weiterhin eine Mischung A enthaltend
- 50 bis 100 Gew.-% eines Kondensationsproduktes der Komponente a), dessen Struktureinheiten abgeleitet sind von Phenolsulfonsäure, Dihydroxydiphenylsulfon und Formaldehyd,
- 0 bis 50 Gew.-% wenigstens eines organischen Gerbhilfsmittels der Komponente b), bevorzugt einer Carbamoylsulfonatgruppen-haltigen Verbindung (b1),
- 0 bis 10 Gew.-%, bevorzugt 0 bis 5 Gew.-% wenigstens eines Zusatzstoffes der Komponente c), der wenigstens ein Emulgator oder dessen Salz ist, insbesondere wenigstens ein nicht-ionisches, Estergruppen-haltiges, alkoxyliertes Polyol mit einem HLB-Wert von wenigstens 13 (c1) und/oder ein Alkylglycosid (c2) und /oder ein nichtionischer Estergruppen-freier alkoxylierter Alkohol (c3),
- 0 bis 10 Gew.-%, bevorzugt 0 bis 5 Gew.-% wenisgstens eines Zusatzstoffes der Komponente d), der wenigstens eine Carbonsäure oder deren Salz ist, bevorzugt Oxalsäure, Bernsteinsäure, Glutarsäure oder Adipinsäure, insbesondere wenigstens eine Hydroxy-Polycarbonsäure, vorzugsweise Citronensäure, Weinsäure oder Milchsäure oder Gemische daraus, und
- 0 bis 10 Gew.-%, bevorzugt 0 bis 5 Gew.-% wenigstens eines weiteren Zusatzstoffes der Komponente e), ausgewählt aus den Gruppen der Fettungsmittel, Füllstoffe und/oder Puffersubstanzen,
wobei die Angaben in Gew.-% auf die Summe der Komponenten a) bis e) bezogen sind.

In einer bevorzugten Ausführungsform des erfindungsgemäßen Verfahrens zur Herstellung von Ledern oder Pelzen unter Einsatz der Leder- oder Pelz-Halbfabrikate, die nach dem erfindungsgemäßen Verfahren zur Herstellung der Leder- oder Pelz-Halbfabrikate erhalten wurden, wird die erfindungsgemäße Mischung A eingesetzt.

Die erfindungsgemäße Mischung A kann allein oder in Kombination mit weiteren üblichen Komponenten, die zur Nachgerbung eingesetzt werden, in dem erfindungsgemäßen Verfahren zur Herstellung von Ledern oder Pelzen eingesetzt werden. Die erfindungsgemäße Mischung kann vor, während oder nach den weiteren üblichen Komponenten, die zur Nachgerbung eingesetzt werden, eingesetzt werden.

Übliche Komponenten, die zur Nachgerbung eingesetzt werden können, sind an sich bekannt. Geeignete Komponenten, die zur Nachgerbung eingesetzt werden können, sind beispielsweise (Co)Polymerisate von Acrylsäure und deren Derivaten, die als wässrige Dispersionen vorliegen (z.B. Lubritan SP, TG, und Leukotan 1084, 1093, von LANXESS), wässrige Dispersionen von Polyisobutenen, hydrophob modifizierte Polyamidcarbonsäuren (z.B. Levotan L, Levotan LB), Polyethercarbonsäure (z.B. Levotan C01), Pfropfcopolymerisate von Acrylsäure oder Acrylsäurederivaten auf Polysacchariden, proteinhaltigen Materialien, Hydrolysaten von Polysacchariden, insbesondere Stärke, Hydrolysaten von Proteinen, insbesondere Kollagen oder Mischungen daraus (z.B. Levotan X-Biomer), Dispersionen auf Basis von ionischen Polyurethanen, Syntane auf Basis von Polykondensaten aus aromatischen Verbindungen mit Formaldehyd wie Tanigan BN, Tanigan 3LN, Tanigan VR, Tanigan OS, Tanigan UW, Tanigan HO, Harzgerbstoffe wie Retingan R7, Retingan ZF, Farbstoffe, Färbehilfsmittel wie Baykanol SL, Dispergiermittel wie Tanigan PR, Fettungsmittel , z.B. solche auf Basis von natürlichen und synthetischen Ölen und Fetten, Hydrophobiermittel wie Emulsionen auf Basis von Polysiloxanen oder Formulierungen auf Basis von paraffinischen Kohlenwasserstoffen oder hydrophobierend wirkenden Polymeren. Diese Produkte sind handelsüblich und dem Fachmann an sich bekannt.

Die Leder oder Pelze, die nach dem erfindungsgemäßen Verfahren zur Herstellung von Ledern oder Pelzen erhalten wurden, sind ebenfalls Gegenstand der vorliegenden Erfindung. Dabei wurden die herausragenden Eigenschaften der erfindungsgemäßen Leder- oder Pelz-Halbfabrikate auch auf die erhaltenen Leder oder Pelze übertragen.

Die Erfindung betrifft weiterhin die Verwendung der erfindungsgemäßen Mischung A zum Behandeln von Häuten oder Fellen, insbesondere von Blößenmaterial.

Des Weiteren betrifft die Erfindung die Verwendung der erfindungsgemäßen Mischung A zum Behandeln von Leder- oder Pelz-Halbfabrikaten, bevorzugt von Wet White-Leder oder-Pelzen.

In den nachfolgenden Beispielen wird die vorliegende Erfindung beispielhaft, ohne zu limitieren, dokumentiert.

### Beispiele

### A) Materialien (Produkte der Fa. LANXESS)

Organische Gerbstoffe:
Tanigan BN: pulverförmiges Kondensationsprodukt auf Basis von Naphthalinsulfonsäure, Dihydroxydiphenylsulfon und Formaldehyd.
Tanigan 3LN: pulverförmiger Weissgerbstoff auf Basis von sulfoniertem Phenol, einer aminofunktionellen Verbindung und Formaldehyd.
Tanigan HO: pulverförmiges Kondensationsprodukt auf Basis von sulfonierten Aromaten, sulfoniertem Phenol und Formaldehyd.
Tanigan UW: pulverförmiges Kondensationsprodukt auf Basis von sulfonierten Aromaten, sulfoniertem Phenol und Formaldehyd.
TANIGAN CF liq: Kondensationsprodukt auf Basis von Naphthalinsulfonsäuren, sulfoniertem Phenol und Formaldehyd.

Sonstige Zusatzstoffe:
PELTEC AN 90: nichtionischer Emulgator.
LEVAZYM AF: wässrige Enzym-Formulierung.
Peltec ADN: Entfettungs- und Netzmittel.
TANIGAN PAK: pulverförmiger Neutralisationgerbstoff.
BAYKANOL Licker SL: Fettungsmittel.
LEVOTAN C-01: anionischer Polyaddukt-Nachgerbstoff mit Carboxylgruppen.
LEUKOTAN 1084: hochmolekulare Polyacrylat-Dispersion (Leukotan: Warenzeichen von Dow Chemical).
LEVOTAN LB: wässrige Dispersion einer modifizierten Polyamidcarbonsäure.
Mimosa XS : Vegetabilgerbstoff (Mimosa).
BAYGENAL Beige L-NGR: beige Farbstoff-Formulierung.
BAYGENAL Brown CRE: braune Farbstoff-Formulierung.
BAYGENAL Black TDE: schwarze Farbstoff-Formulierung.
LEVOTAN W: Hydrophobiermittel auf Basis einer Silicon-Mikroemulsion.
RETINGAN R 12: Harzgerbstoff mit selektiver Füllwirkung auf Basis eines Formaldehyd-Kondensats.

### B) Herstellung des Kondensationsproduktes der Komponente a)

### Beispiel 1: Wässrige Lösung des Kondensationsproduktes der Komponente a)

Zu einer Vorlage aus 150,0 g Wasser werden 173,3 g (2,17 mol) Natronlauge (50 Gew.-%) dosiert, wobei sich eine Temperatur von ca. 60°C ergibt. Bei 60°C werden 252,7 g (0,94 mol) Phenolsulfonsäure (65 Gew.-%) in 30 Minuten zudosiert. Die Reaktionsmischung wird während der Dosierzeit durch Kühlung auf 80°C gehalten.

Dann wird eine wässrige Suspension (52,6 Gew.-%), enthaltend 680,0 g (2,72 mol) Dihydroxydiphenylsulfon (100 Gew.-%), welche durch Kondensation von Phenolsulfonsäure mit Phenol und Anschlämmen des Reaktionsproduktes in Wasser / verdünnter Natronlauge hergestellt wird, bei 90°C in 50 Minuten zugegeben. Es wird 1 Stunde bei 90°C nachgerührt.

Nun werden 256,0 g (2,56 mol) wässrige Formaldehydlösung (30 Gew.-%) bei 90-95°C in 45 Minuten zudosiert. Die Temperatur wird dann auf 105°C erhöht, wobei die Kondensationsreaktion beginnt und die Temperatur bis ca. 115°C steigt. Es wird 6 Stunden bei 114-116°C und einem Druck von ca. 1 barg kondensiert.

Anschliessend wird auf 90°C abgekühlt. Es werden 2,5 g Rongalit C zugegeben und 30 Minuten verrührt. Die wässrige Lösung hat einen Feststoffgehalt von ca. 50 Gew.-%.

Es werden dann Feststoffgehalt durch Zugabe von Wasser eingestellt sowie der pH-Wert.

### Feststoffgehalt: 25 Gew.-%, pH (unverdünnt): 8,5

### Beispiel 2: Kondensationsprodukt der Komponente a) als Feststoff

Die wässrige Lösung aus Beispiel 1 mit einem Feststoffgehalt von ca. 50 Gew.-% wird bei 180°C sprühgetrocknet. Man erhält ein helles Pulver.

### Wassergehalt: 7,2 Gew.-%, pH (5 g / 50 g Wasser): 8,3

### C) Formulierungen der Komponenten b) bis e)

### Beispiel 3: Formulierung der Komponenten b1), c1) und d)

Zu einer Lösung aus 95,5 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7), in 3199,5 g Wasser und 4524,8 g Natriumbisulfitlösung (NaHSO₃, 38-40% in Wasser) werden bei 25°C und einem pH-Wert von 4,36 unter Rühren 1358,3 g Hexamethylendiisocyanat innerhalb von 40 Minuten zudosiert, wobei die Temperatur der Reaktionsmischung innerhalb auf 50°C eingestellt wird. Der pH-Wert beträgt 5,62. Dann werden 70,3 g Citronensäure (wasserfrei) gelöst in 70,3 g Wasser zugegeben.

Es wird noch 1 Stunde bei 50°C nachgerührt, wobei das Reaktionsgemisch klar wird. Dann wird innerhalb von 2 Stunden auf 25°C abgekühlt. Es wird noch 1 Stunde bei Raumtemperatur (20-23°C) nachgerührt. Der pH-Wert der Lösung beträgt 4,67. Dann werden 211,3 g Citronensäure (wasserfrei) gelöst in 211,3 g Wasser zugegeben und 15 Minuten verrührt. Die Konzentration wird durch Zugabe von 258,7 g Wasser eingestellt. Man erhält eine klare 35,0 %ige Lösung mit einem pH-Wert von 3,11.

500 g der Lösung wurden anschließend sprühgetrocknet. Es wurde ein weisses Pulver erhalten.

### Wassergehalt: 1.5%, pH (in wässriger Lösung mit 10% Feststoffgehalt): 3,3

### Beispiel 4: Formulierung der Komponenten b1), c1), d) und e)

Zu 500 g der 35%igen Lösung aus Beispiel 3 wurden 8,75 g Natriumsulfat zugegeben und bei 40°C verrührt. Die erhaltene Lösung wurde anschließend sprühgetrocknet.

Es wurde ein weisses Pulver erhalten.

### Wassergehalt: 1.0 %, pH (in wässriger Lösung mit 10% Feststoffgehalt): 3,5

### Beispiel 5: Formulierung der Komponenten b1), b2), c1), d) und e)

Zu einer Lösung aus 95,5 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7), in 3199,5 g Wasser und 4524,8 g Natriumbisulfitlösung (NaHSO₃, 38-40% in Wasser) werden bei 25°C und einem pH-Wert von 4,36 unter Rühren 1358,3 g Hexamethylendiisocyanat innerhalb von 40 Minuten zudosiert, wobei die Temperatur der Reaktionsmischung innerhalb auf 50°C eingestellt wird. Der pH-Wert beträgt 5,62. Dann werden 70,3 g Citronensäure (wasserfrei) gelöst in 70,3 g Wasser zugegeben.

Es wird noch 1 Stunde bei 50°C nachgerührt, wobei das Reaktionsgemisch klar wird. Dann wird innerhalb von 2 Stunden auf 25°C abgekühlt. Es wird noch 1 Stunde bei Raumtemperatur (20-23°C) nachgerührt. Der pH-Wert der Lösung beträgt 4,67. Dann werden 211,3 g Citronensäure (wasserfrei) gelöst in 211,3 g Wasser zugegeben und 15 Minuten verrührt. Die Konzentration wird durch Zugabe von 258,7 g Wasser eingestellt. Man erhält eine klare, 35,0 %ige Lösung mit einem pH-Wert von 3,11.

5000 g einer 35%igen Lösung der oben beschriebenen Carbamoylsulfonatgruppen-haltigen Verbindung und 5000 g einer 50%igen Lösung eines Syntans aus Ditolylethersulfonsäure, 4,4'-Dihydroxydiphenylsulfon und Formaldehyd werden mit Hilfe einer Pumpe in einen Sprühtrockner mit Scheibenzerstäuber eingespeist, wobei die Einlasstemperatur auf 165°C eingestellt wurde. Die Ausgangstemperatur betrug zwischen 70 und 80°C. Anbackungen im Trockner wurden nicht beobachtet.

Es wurde ein feinteiliges, fast farbloses Pulver mit einer Schüttdichte von 562 g pro 1000 mL erhalten, das einen Trockenrückstand von 99,27 % (IR-Trockner, 120°C, Standardtrocknung, Trocknung bis zur Gewichtskonstanz) aufwies. Das erhaltene staubfreie Produkt hatte eine Teilchengröße von 5,0 µm bis 300 µm und löste sich in Wasser sehr rasch auf, ohne zu verklumpen. Eine Lösung von 5 g Pulver in 50 ml Wasser hatte einen pH-Wert von 3,40.

### Beispiel 6:

80 g des Produkts aus Beispiel 2 wurden mit 20 g des Produkts aus Beispiel 4 gemischt.

### Beispiel 7:

80 g des Produkts aus Beispiel 2 wurden mit 20 g des Produkts aus Beispiel 3 gemischt.

### Beispiel 8:

90 g des Produkts aus Beispiel 2 wurden mit 10 g des Produkts aus Beispiel 4 gemischt.

### Beispiel 9:

90 g des Produkts aus Beispiel 2 wurden mit 10 g des Produkts aus Beispiel 3 gemischt.

### Beispiel 10:

80 g des Produkts aus Beispiel 2 wurden mit 20 g des Produkts aus Beispiel 5 gemischt.

### Beispiel 11:

90 g des Produkts aus Beispiel 2 wurden mit 10 g des Produkts aus Beispiel 5 gemischt.

### D) Erfindungsgemäßes Verfahren zur Herstellung von Leder-Halbfabrikaten

Als Ausgangsmaterial werden nach dem Äscher gespaltene und gewogene Blößen (Rind) eingesetzt, deren Dicke ca. 2,2-2,5 mm beträgt. Alle folgenden Chemikalien-Einsatzmengen beziehen sich auf dieses Bezugsgewicht (Blößengewicht).

Der Prozess beginnt mit einem Waschprozess mit 30°C warmen Wasser für ca. 10 Minuten.

Nach dem Flottenwechsel beginnt man mit einer 30 minütigen Vorentkälkung, die stickstofffrei sein muss. Hierzu benutzt man ca. 0,2 Gew.-% eines 90%igen Tensides (z.B. PELTEC AN 90) zusammen mit 0,2 Gew.-% Natriumbisulfit zur Unterbindung von Schwefelwasserstoffbildung und 0,15 Gew.-% eines Entkälkungsmittels (z.B. PELTEC DL EXP 2031, von LANXESS). Nach 30 Minuten ist der pH Wert von ca. 12,5 auf pH 9 gesunken. Es folgt nun die eigentliche Entkälkung, die aus einer Zugabe von zwei verschiedenen Produkten besteht: Es werden 1,0 Gew.-% des Entkälkungsmittels (z.B. PELTEC DLP EXP 2025, von LANXESS), und 0,2 Gew.-% eines zweiten Entkälkungsmittels (z.B. PELTEC DL EXP 2031, von LANXESS) zugefügt. Diese Entkälkung hat den Zweck, den Kalk, der während des Äschers zur pH-Erhöhung und während des Hautaufschlusses in die Haut eingebracht wurde, wieder in wasserlösliche Salze zu überführen und aus der Blöße herauszuwaschen. Dieser Vorgang dauert in Abhängigkeit von der Blößendicke zwischen 90 und 180 Minuten. Es erfolgt eine Überprüfung des pH-Werts, indem Phenolphthalein auf die Schnittkante der frisch angeschnittenen Blöße geträufelt wird. Der Schnitt sollte farblos sein. Ist noch eine rosa Zone erkennbar, muss die Laufzeit verlängert werden.

Danach wird mit 35°C warmen Wasser aufgeflottet und für ca. 45 Minuten mittels Zugabe eines stickstofffreien Beizmittels gebeizt. Das dient dem Abbau von nicht ledergebenden Eiweißstoffen und erhöht die Weichheit des resultierenden Leders. Der ideale pH Wert sollte zwischen pH 8,0 und 8,5 liegen. Es folgt ein mehrmaliges Waschen mit 20°C kaltem Wasser, um den gelösten Kalk herauszuwaschen und die Beizaktivität des Enzymes zu stoppen.

Bis zu dieser Stelle laufen alle Gerbsysteme mehr oder weniger gleich. Bei den meisten bekannten Gerbsystemen folgt nun ein Pickel (Kochsalz-Säure-Gemisch), der den pH Wert auf ca. 3,0 senkt und damit die Blöße für die Aufnahme der Gerbstoffe vorbereitet.

Bei der folgenden Ausführungsform des erfindungsgemäßen Verfahrens wird auf diesen Prozessschritt des Pickels verzichtet.

Es wird die Gerbung bei einem pH Wert von ca. 8 mit einer frischen Flottenmenge von 30-50 Gew.-% begonnen. Optional kann ein Fettungsmittel (z.B. EUREKA 975 ES) zur Steigerung der Weichheit zugegeben werden. Danach oder gleichzeitig werden 5 Gew.-% des Kondensationsproduktes der Komponente a) (aus Beispiel 1 bzw. 2, das flüssige Produkt aus Beispiel 1 wurde feststoffgleich zum pulverförmigen Produkt aus Beispiel 2 eingesetzt) zugegeben und das Fass für ca. 5 Stunden bei ca. 14 Umdrehungen pro Minute laufen gelassen. Dieses ist die Penetrationsphase, die mittels eines Indikators (Eisen(III)-Chlorid) auch überprüft werden kann. Der pH Wert bleibt stabil bei ca. 8. In diesem Bereich zeigt das Produkt noch eine geringe Gerbwirkung, welche sich in der niedrigen Schrumpfungstemperatur (Ts) von ca. 65°C zeigt. Nach der Penetration wird nun das Kondensationsprodukt der Komponente a) mit Ameisensäure fixiert und dessen Gerbwirkung aktiviert. Um einen Schimmel-Befall zu vermeiden, wird noch ein Fungizid zugesetzt (z.B. PREVENTOL U-Tec G, von LANXESS). Nachdem sich ein pH-Gleichgewicht von ca. 4,0 - 4,5 eingestellt hat, wird das Leder gewaschen. Durch die Aktivierung der Gerbwirkung steigt die Schrumpfungstemperatur (Ts) auf über 70°C, welche für die nun folgenden mechanischen Arbeitsschritte vollkommen ausreichend ist. Auf eine weitere Zugabe eines Trockenstell-Hilfsmittels zur besseren Entwässerung und Handhabung an den Maschinen, wie es bei ähnlichen Gerbverfahren üblich ist, kann bei dem erfindungsgemäßen Verfahren verzichtet werden.

In Tabelle 1 sind die Verfahrensschritte des erfindungsgemäßen Verfahrens zur Herstellung von Leder-Halbfabrikaten dargestellt (die Gew.-% beziehen sind auf das Blößengewicht).

**Tabelle 1**

| **Produkt:** | | **Menge [Gew.-%**] | | **Laufzeit [min]** | **Bemerkungen** |
|---|---|---|---|---|---|
| | Wasser 30°C | 200 | | 10 | |
| | | | Flotte ab | | |
| | Wasser 32°C | 30 | | | |
| | PELTEC AN 90 | 0,2 | | | |
| | Natriumbisulfit | 0,2 | | | |
| + | PELTEC DL EXP2031 | 0,15 | | 30 | pH 9,0 |
| | | | | | |
| + | PELTEC DLP EXP 2025 | 1,0 | | | |
| | PELTEC DL EXP 2031 | 0,2 | | 75 | pH 8,3 |
| | | | | | |
| + | Wasser 35°C | 50 | | | |
| | LEVAZYM AF | 0,15 | | 45 | Prüfen Schnitt mit Phenolphthalei n: farblos |
| | | | | | pH 8,2 |
| | | | Flotte ab | | |
| | Wasser 20°C | 150 | | 10 | |
| | | | Flotte ab | | |
| | Wasser 20°C | 150 | | 10 | |
| | | | Flotte ab | | |
| | Wasser 25°C | 50 | | | |
| | EUREKA 975 ES | 1,0 | | | |
| | Produkt aus Beispiel 1 bzw. 2 (Einsatzmenge bezogen auf Feststoff) | 5,0 | | 300 | pH 8,1 |
| | | | | | Ts: 65 - 67°C |
| + | Ameisensäure (1 : 5) | 1,0 | | | |
| | PREVENTOL U-Tec G | 0,15 | | 60 | pH 5,0 |
| + | Ameisensäure (1 : 5) | 1,0 | | 60 | pH ∼ 4,0 |
| | | | Flotte ab | | Ts: 70 - 73°C |
| | Wasser 20°C | 200 | | 10 | |
| | | | Flotte ab | | |

Nach dem erfindungsgemäßen Verfahren werden die Leder-Halbfabrikate auf einem Bock gelagert, abgewelkt und gefalzt.

Das flüssige Produkt aus Beispiel 1 wurde feststoffgleich zum pulverförmigen Produkt aus Beispiel 2 eingesetzt. Die Einsatzmenge dieses Produkt bezieht sich auf die Menge Feststoff der jeweils eingesetzten Produkte aus den weiteren Herstellungsbeispielen, jeweils bezogen auf Blößengewicht.

Die Produkte aus den Herstellungsbeispielen 6-11 wurden analog zu den Produkten aus Beispiel 1 bzw. 2 im erfindungsgemäßen Verfahren eingesetzt.

Die entsprechenden experimentellen Daten der Anwendungsbeispiele sind in der nachfolgenden Tabelle 2 zusammengefasst.

**Tabelle 2**

| **Anwendungsbeispiel Nr** | **Produkt** | **Menge [Gew.-%]** | **Pickel** | **Laufzeit [min]** | **pH Ende Laufzeit** | **Ts [°C]** |
|---|---|---|---|---|---|---|
| 1 | Beispiel 1 | 5 | nein | 300 | 8,1 | 73 |
| 2 | Beispiel 2 | 5 | nein | 300 | 8,1 | 72 |
| 3 | Beispiel 1 | 5 | ja | 300 | 5 | 72 |
| 4 | Beispiel 2 | 5 | ja | 300 | 5 | 73 |
| 5 | Beispiel 6 | 5 | nein | 300 | 8,1 | 73 |
| 6 | Beispiel 7 | 5 | nein | 300 | 8,1 | 71 |
| 7 | Beispiel 8 | 5 | nein | 300 | 8,1 | 72 |
| 8 | Beispiel 9 | 5 | nein | 300 | 8,1 | 72 |
| 9 | Beispiel 10 | 5 | nein | 300 | 8,1 | 71 |
| 10 | Beispiel 11 | 5 | nein | 300 | 8,1 | 71 |
| 11 (Vergleich) | Tanigan BN | 7,5 | nein | 300 | 8,1 | 61 / 65 |
| 12 (Vergleich) | Tanigan 3LN | 7,5 | nein | 300 | 8,1 | 59 / 63 |
| 13 (Vergleich | Tanigan HO | 7,5 | nein | 300 | 8,1 | 60 |
| 14 (Vergleich) | Tanigan UW | 7,5 | nein | 300 | 8,1 | 62 |
| 15 (Vergleich) | Tanigan BN | 7,5 | ja | 300 | 5 | 61 |
| 16 (Vergleich) | Tanigan 3LN | 7,5 | ja | 300 | 5 | 59 |
| 17 (Vergleich | Tanigan HO | 7,5 | ja | 300 | 5 | 60 |
| 18 (Vergleich) | Tanigan UW | 7,5 | ja | 300 | 5 | 62 |

Die mit den Produkten der Beispiele 1, 2, 6-11 hergestellten Leder-Halbfabrikate zeigen keinen Narbenzug und lassen sich sehr gut abwelken. Ihre Falzbarkeit ist gegenüber den Leder-Halbfabrikaten aus den Vergleichsbeispielen 11-18 deutlich verbessert, da sie im Unterschied zu dem Leder-Halbfabrikaten der Vergleichsbeispiele 11-18 nicht klebrig sind. Die Leder-Halbfabrikate gemäß den Vergleichsbeispielen 12 und 16 waren zudem blößenartig.

### E) Erfindungsgemäßes Verfahren zur Herstellung von Leder

Die in den oben beschriebenen Anwendungsbeispielen erhaltenen erfindungsgemäßen Leder-Halbfabrikate aus Anwendungsbeispielen 1, 2 und den Vergleichsbeispielen 11, 12 (8,80 kg, Falzstärke 1,0 mm) wurden nach dem Falzen gemäß einer dem Fachmann bekannten Standard-Arbeitsweise nachgegerbt, wobei zudem das Produkt gemäß Beispiel 2 eingesetzt wurde. Des Weiteren wurden die Leder-Halbfabrikate gefärbt, gefettet und zum Crustleder verarbeitet. Es wurde eine typische Nachgerb-Rezeptur zur Herstellung von Automobil-Crustleder angewendet.

Die Leder werden anschließend in üblicher Arbeitsweise fertig gestellt und entsprechend dem Verwendungszweck bewertet. In Tabelle 3 sind die Verfahrensschritte des erfindungsgemäßen Verfahrens zur Herstellung von Leder dargestellt (die Gew.-% beziehen sind auf das Gewicht des Leder-Halbfabrikats).

**Tabelle 3**

| **Prozess** | **Menge** [**Gew.-%**] | **Produkte** | | **Laufzeit [min]** | **pH** | **Bemerkung** |
|---|---|---|---|---|---|---|
| | | **Zugabe der Häute** | | | | |
| Waschen | 200,00 | Wasser 35°C | 1:6 | | | |
| | 0,30 | Peltec ADN | | 10 | | |
| | | | | | 4,30 | |
| Flotte ab | | | | | | |
| Neutralisation | 50,00 | Wasser 30°C | | | | |
| | 0,30 | Natriumbicarbonat | 1:8 | | | |
| | 2,00 | TANIGAN PAK | | | | |
| Nachgerbung | 3,00 | BAYKANOL Licker SL | 1:3 | 30 | | |
| | | | | | 5,20 | |
| | 2,00 | LEVOTAN C-01 | 1:3 | 5 | | |
| | | | | | | |
| | 4,00 | LEUKOTAN 1084 | 1:3 | 10 | | |
| | | | | | | |
| | 3,00 | LEVOTAN LB | 1:3 | 10 | 5,40 | |
| | | | | | | |
| | 8,00 | TANIGAN BN ) | | | | |
| | 3,00 | Mimosa XS ) | | | | |
| | 5,00 | TANIGAN CF liq ) | | | | |
| | | Natriumbicarbonat | 1:8 | 60 | | |
| | | | | | 4,90 | |
| | 2,00 | BAYKANOL Licker SL | | | | |
| | 6,00 | Produkt gemäss Beispiel 2 | | | | |
| | 3,00 | Mimosa XS ) | 1:8 | | | |
| Färbung | 0,40 | BAYGENAL Beige L-NGR | | | | |
| | 0,05 | BAYGENAL Brown CRE | | | | |
| | 0,01 | BAYGENAL Black TDE | | 180 | | |
| | | | | | 5,10 | Penetration |
| | 50,00 | Wasser 50°C | 1:8 | 10 | | Heizung 50°C |
| | 3,00 | BAYKANOL Licker SL ) | 1:5 | 60 | | |
| | | | | | | über Nacht Automatik. |
| | | | | | 5,30 | |
| | 1,00 | Ameisensäure | 1:5 | 30 | | |
| | | | | | 4,30 | |
| Flotte ab | | | | | | |
| Fettlicker | 100,00 | Wasser 50°C | | | | |
| | 2,00 | LEVOTAN W ) | 1:8 | | | |
| | 7,00 | BAYKANOL Licker SL ) | 1:5 | 60 | 4,50 | |
| | | | | | | |
| | *4,00* | RETINGAN R 12 | | 30 | | |
| | | | | | *5,10* | |
| | 2,50 | Ameisensäure | 1:5 | 40 | | |
| | | | | | 3,70 | |
| | 0,50 | Ameisensäure | 1:5 | 20 | | |
| | | | | | 3,50 | |
| | | | | | | |
| Flotte ab | | | | | 3,55 | |
| Waschen | 300,00 | Wasser 50°C | | 10 | | |
| Flotte ab | | | | | | |
| Waschen | 300,00 | Wasser 20°C | | 10 | | |
| Fass entleeren | | | | | | |

Nach dem erfindungsgemäßen Verfahren erfolgten mit den erhaltenen Ledern mechanische Arbeiten wie Ausrecken, Vakuumtrocknung 40°C/1min, Hängetrocknen, Konditionierung, Stollen und Millen.

Für die erhaltenen erfindungsgemäßen Leder ergibt sich folgende Gesamtbeurteilung:

**Tabelle 4**

| **Einsatz** | **Halbfabrikat aus Anwendungsbeispiel 11** | **Halbfabrikat aus Anwendungsbeispiel 12** | **Halbfabrikat aus Anwendungsbeispiel 1** | **Halbfabrikat aus Anwendungsbeispiel 2** |
|---|---|---|---|---|
| *Ts¹* | *61°C* | *59°C* | *73°C* | *72°C* |
| *Narbenzug¹* | *kein* | *kein* | *kein* | *kein* |
| *Abwelken¹* | *3* | *4* | *2 (beste)* | *2 (beste)* |
| *Falzbarkeit¹* | *3 (klebrig)* | *4 (sehr klebrig)* | *2 (kaum)* | *1 (beste)* |
| Fülle² | 2 | 3 | 2 | 2 |
| Weichheit² | 3 | 4 | 2 | 2 |
| Millbarkeit² | 2 | 3 | 1 | 1 |

| | | | | |
|---|---|---|---|---|
| *¹*: Die Eigenschaften wurden an den entsprechenden Halbfabrikaten bestimmt; *²*: Die Eigenschaften wurden an den entsprechenden Ledern bestimmt; Gesamtbeurteilung: 1: sehr gut, bis 5: nicht zufriedenstellend. | | | | |

Erfindungsgemäße Leder, welche aus den Leder-Halbfabrikaten aus den Anwendungsbeispielen 1 und 2 erhalten wurden, sind als besonders vorteilhaft zu bewerten. Hervorzuheben ist, dass in den Anwendungsbeispielen 1 bis 10 eine deutlich geringere Menge an Gerbstoff eingesetzt wurde als in den Vergleichsbeispielen 11-18. Bei einer Reduktion der Einsatzmenge des Gerbstoffs in den Vergleichsbeispielen werden hingegen blößenartige Materialien erhalten.

Das Leder gemäß Anwendungsbeispiel 11 ergibt einen zwar eine gute Millbarkeit und Fülle, allerdings waren die Falzbarkeit schlecht und die Ts sehr niedrig.

Das Leder gemäß Anwendungsbeispiel 12 weist ein schlechtes Falzergebniss und eine niedrige Ts auf. Auch die Crusteigenschaften wie Fülle, Weichheit und Millbarkeit erhielten eine deutlich schlechtere Note. Dieser Versuch zeigt, dass aus den erfindungsgemäß hergestellten Leder-Halbfabrikaten Leder mit den vorteilhaftesten Eigenschaften erhalten wurden.

## Patentansprüche

1. Verfahren zur Herstellung von Leder- oder Pelz-Halbfabrikaten, **dadurch gekennzeichnet, dass** Häute oder Felle in Gegenwart eines Kondensationsproduktes der Komponente a), dessen Struktureinheiten abgeleitet sind von Phenolsulfonsäure, Dihydroxydiphenylsulfon und Formaldehyd, bei einem pH-Wert von 6,5 - 8,5, bevorzugt 7 - 8, behandelt werden.

2. Verfahren nach Anspruch 1, **dadurch gekennzeichnet, dass** das Verfahren ohne den Verfahrensschritt des Pickelns erfolgt.

3. Verfahren nach Anspruch 1 oder 2, **dadurch gekennzeichnet, dass** die Struktureinheiten des Kondensationsproduktes der Komponente a) abgeleitet von Phenolsulfonsäure, Dihydroxydiphenylsulfon und Formaldehyd, in einem Verhältnis von 1 : (1-10): (1,4-7,7), bevorzugt 1: (1-5): (1,4-4,2), besonders bevorzugt 1 : (2-4) : (2,1-3,5), vorliegen.

4. Verfahren nach einem der Ansprüche 1 bis 3, **dadurch gekennzeichnet, dass** das Kondensationsprodukt der Komponente a) als Feststoff oder enthaltend in einer wässrigen Lösung eingesetzt wird.

5. Verfahren nach einem der Ansprüche 1 bis 4, **dadurch gekennzeichnet, dass** das Verfahren ein Verfahren zur Herstellung von Wet White-Ledern oder-Pelzen ist.

6. Verfahren nach einem der Ansprüche 1 bis 5, **dadurch gekennzeichnet, dass** zusätzlich zu dem Kondensationsprodukt der Komponente a) wenigstens ein organisches Gerbhilfsmittel der Komponente b), das von dem Kondensationsprodukt der Komponente a) verschieden ist, zugegen ist, wobei das Kondensationsprodukt der Komponente a) und das wenigstens eine organische Gerbhilfsmittel b) bevorzugt in einem Verhältnis von 99 : 1 bis 50 : 50, besonders bevorzugt in einem Verhältnis von 95 : 5 bis 70 : 30 vorliegen.

7. Verfahren nach einem der Ansprüche 1 bis 6, **dadurch gekennzeichnet, dass** zusätzlich zu dem Kondensationsprodukt der Komponente a) wenigstens ein Zusatzstoff der Komponente c), der von dem Kondensationsprodukt der Komponente a) verschieden ist und der wenigstens ein Emulgator oder dessen Salz ist, zugegen ist.

8. Verfahren nach einem der Ansprüche 1 bis 7, **dadurch gekennzeichnet, dass** zusätzlich zu dem Kondensationsprodukt der Komponente a) wenigstens ein Zusatzstoff der Komponente d), der von dem Kondensationsprodukt der Komponente a) verschieden ist und der der wenigstens eine Carbonsäure oder deren Salz ist, zugegen ist.

9. Verfahren nach einem der Ansprüche 1 bis 8, **dadurch gekennzeichnet, dass** die Häute oder Felle in Gegenwart folgenden Komponenten behandelt werden:
- 50 bis 100 Gew.-% eines Kondensationsproduktes der Komponente a), dessen Struktureinheiten abgeleitet sind von Phenolsulfonsäure, Dihydroxydiphenylsulfon und Formaldehyd,
- 0 bis 50 Gew.-% wenigstens eines organischen Gerbhilfsmittels der Komponente b), bevorzugt einer Carbamoylsulfonatgruppen-haltigen Verbindung (b1),
- 0 bis 10 Gew.-%, bevorzugt 0 bis 5 Gew.-% wenigstens eines Zusatzstoffes der Komponente c), der wenigstens ein Emulgator oder dessen Salz ist, besonders bevorzugt wenigstens ein nicht-ionisches, Estergruppen-haltiges, alkoxyliertes Polyol mit einem HLB-Wert von wenigstens 13 (c1) und/oder ein Alkylglycosid (c2) und/ oder ein nichtionischer Estergruppen-freier alkoxylierter Alkohol (c3),
- 0 bis 10 Gew.-%, bevorzugt 0 bis 5 Gew.-% wenigstens eines Zusatzstoffes der Komponente d), der wenigstens eine Carbonsäure oder deren Salz ist, bevorzugt Oxalsäure, Bernsteinsäure, Glutarsäure oder Adipinsäure, insbesondere wenigstens eine Hydroxy-Polycarbonsäure, vorzugsweise Citronensäure, Weinsäure oder Milchsäure oder Gemische daraus, und
- 0 bis 10 Gew.-%, bevorzugt 0 bis 5 Gew.-% wenigstens eines weiteren Zusatzstoffes der Komponente e), ausgewählt aus den Gruppen der Fettungsmittel, Füllstoffe und/oder Puffersubstanzen,
wobei die Angaben in Gew.-% (Gewichtsprozent) auf die Summe der Komponenten a) bis e) bezogen sind.

10. Leder- oder Pelz-Halbfabrikate, bevorzugt Wet White-Leder oder -Pelze, hergestellt nach einem Verfahren gemäß einem der Ansprüche 1 bis 9.

11. Mischung A, enthaltend
- 50 bis 100 Gew.-% eines Kondensationsproduktes der Komponente a), dessen Struktureinheiten abgeleitet sind von Phenolsulfonsäure, Dihydroxydiphenylsulfon und Formaldehyd,
- 0 bis 50 Gew.-% wenigstens eines organischen Gerbhilfsmittels der Komponente b), bevorzugt einer Carbamoylsulfonatgruppen-haltigen Verbindung (b1),
- 0 bis 10 Gew.-%, bevorzugt 0 bis 5 Gew.-% wenigstens eines Zusatzstoffes der Komponente c), der wenigstens ein Emulgator oder dessen Salz ist, besonders bevorzugt wenigstens ein nicht-ionisches, Estergruppen-haltiges, alkoxyliertes Polyol mit einem HLB-Wert von wenigstens 13 (c1) und/oder ein Alkylglycosid (c2) und/ oder ein nichtionischer Estergruppen-freier alkoxylierter Alkohol (c3),
- 0 bis 10 Gew.-%, bevorzugt 0 bis 5 Gew.-% wenigstens eines Zusatzstoffes der Komponente d), der wenigstens eine Carbonsäure oder deren Salz ist, bevorzugt Oxalsäure, Bernsteinsäure, Glutarsäure oder Adipinsäure, insbesondere wenigstens eine Hydroxy-Polycarbonsäure, vorzugsweise Citronensäure, Weinsäure oder Milchsäure oder Gemische daraus, und
- 0 bis 10 Gew.-%, bevorzugt 0 bis 5 Gew.-% wenigstens eines weiteren Zusatzstoffes der Komponente e), ausgewählt aus den Gruppen der Fettungsmittel, Füllstoffe und/oder Puffersubstanzen,
wobei die Gew.-% bezogen sind auf die Summe der Komponenten a) bis e).

12. Verfahren zur Herstellung von Ledern oder Pelzen unter Einsatz der Leder- oder Pelz-Halbfabrikate, bevorzugt Wet White-Leder oder -Pelze, gemäß Anspruch 10.

13. Verfahren nach Anspruch 12, **dadurch gekennzeichnet, dass** die Mischung A gemäß Anspruch 11 in dem Verfahren eingesetzt wird.

14. Leder oder Pelze hergestellt nach einem Verfahren gemäß Anspruch 12 oder 13.

15. Verwendung der Mischung A gemäß Anspruch 11 zum Behandeln von Häuten oder Fellen.
